# EUROPEAN PATENT APPLICATION

(11) **EP 3 373 628 A1**
(43) Date of publication of application: **12.09.2018**
(21) Application number: 16861359.4
(22) Date of filing: 04.08.2016
(51) Int. Cl.: H04W 16/14

(54) **SIGNAL PROCESSING METHOD AND BASE STATION**

(30) Priority: 06.11.2015 CN 201510752708
(71) Applicant: ZTE Corporation, Shenzhen, Guangdong 518057 (CN)
(72) Inventor: XU, Hanqing, Shenzhen, Guangdong 518057 (CN); ZHAO, Yajun, Shenzhen, Guangdong 518057 (CN); MO, Linmei, Shenzhen, Guangdong 518057 (CN)
(74) Representative: Studio Torta S.p.A.
(86) International application number: PCT/CN2016/093257
(87) International publication number: WO 2017/076090

(57) **Abstract**

Disclosed are a signal processing method and base station, composing: a base station configuring parameters used for sending an unlicensed carrier DRS and transmitting the configured parameters to a UE; said parameters comprising a DRS occasion offset and/or a DRS occasion number and/or DRS occasion position information and/or a DRS period. In this way, the UE may perform, according to the received parameters, relevant functions of cell detection, synchronization, and/or RRM measurement. By means of the technical solutions provided by the embodiments of the present invention, a DRS in an unlicensed carrier is configured and sent.

## Description

### TECHNICAL FIELD

The embodiments of the present disclosure relate to, but are not limited to unlicensed carrier technologies, and more particularly, to a method for processing a signal and a base station.

### BACKGROUND

Long Term Evolution-Unlicensed (LTE-U) refers to the deployment of a LTE in an unlicensed carrier, which is used to meet the increasing capacity requirements of wireless communication systems and improve the use efficiency of unlicensed spectrums, and is a potentially important direction of evolution for the LTE and future wireless communications. When designing the LTE-U, it is necessary to consider how to compete the unlicensed carriers in a fair and friendly manner with different systems such as Wireless Fidelity (WiFi) and radar and the same LTE-U system, to perform data transmission. Meanwhile, it is necessary to not influence but preserve the technical characteristics of the LTE as much as possible. According to the expression of a 3GPP standard conference, the LTE-U system may also be referred to as an LTE Licensed Assisted Access (LAA) system.

For a communication system using the unlicensed carrier, it is necessary to avoid using the unlicensed carrier that has been already in use by an existing station. Otherwise, interference between systems may be caused. Therefore, in some countries (such as Europe and Japan), it is mandatory for the unlicensed carrier to support the Listen Before Talk (LBT) function, that is, it is necessary to perform Clear Channel Assessment (CCA) before using a ceratin unlicensed carrier. If it is found that a device is using the unlicensed carrier, or the detected signal energy exceeds a CCA threshold, then the access is delayed; and if the channel is found to be idle, or if the detected signal energy is below the CCA threshold, then the unlicensed carrier is occupied. It is also necessary to solve problems such as cell discovery, synchronization, and Radio Resource Management (RRM) when using the unlicensed carriers. A Discovery Reference Signal (DRS) defined by 3GPP Rel-12 may be used as a research reference. The DRS composition defined by Rel-12 includes: a Primary Synchronization Signal/Secondary Synchronization Signal (PSS/SSS), a Cell-specific Reference Signal (CRS), and a configurable Channel State Information-Reference Signal (CSI-RS). The duration of the DRS per cycle in a Frequency Division Duplex (FDD) mode may be one to five consecutive subframes. The duration of the DRS in a Time Division Duplex (TDD) mode may be two to five consecutive subframes. Both CRS and CSI-RS use a single port, which are port 0 and port 15 respectively. At present, a pattern design of LAA DRS is mainly based on Rel-12 DRS, and then some characteristics of the unlicensed carriers are considered, such as a time domain continuity, a rule requirement for bandwidth occupied in a frequency domain, and a measurement accuracy, which will not be elaborated here. By the end of October, 2015, a preliminary conclusion of 3GPP was that LAA DRS uses the structures of 12 Orthogonal Frequency Division Multiplexing (OFDM) symbols, including CRS, PSS/SSS, and configurable CSI-RS. Compared with Rel-12 DRS, the duration of LAA DRS is 12 symbols, and CSI-RS may be configured with multiple ports.

However, there is no relevant solution for how to configure and transmit the DRS in the unlicensed carriers.

### SUMMARY

The following is an overview of the subject detailed herein. This summary is not intended to limit the scope of protection of the claims.

The embodiments of the present disclosure provide a method for processing a signal and a base station capable of implementing configuration and transmission of a DRS in an unlicensed carrier.

The embodiments of the present disclosure provide a first method for processing a signal, including: configuring, by a base station, a parameter for transmitting an unlicensed carrier discovery reference signal DRS, and issuing the configured parameter to a UE;
wherein, the parameter includes a DRS occasion offset, and/or a DRS occasion number, and/or DRS occasion position information, and/or a DRS period.

Optionally, when the parameter includes the DRS occasion offset, the DRS occasion is an offset of a DRS occasion position to be transmitted relative to a DRS measurement timing configuration DMTC occasion initial position or a preset initial position.

Optionally, when the parameter includes the DRS occasion number, the DRS occasion number is a number of DRS occasions to be transmitted within a preset period, or within a DRS transmission window, or within a configured DMTC, or within a measurement gap GAP. Optionally, the DRS occasion number is a number of times that the base station plans to transmit the DRS; or, a maximum number of times that the base station plans to transmit the DRS successfully.

Optionally, when the parameter includes the DRS occasion position information, the DRS occasion position information is position information of the DRS occasion to be transmitted by the base station within a preset period, or within a DRS transmission window, or within a configured DMTC, or within a measurement gap GAP.

Optionally, the DRS occasion number is indicated by reusing a licensed carrier DRS duration parameter ds-OccasionDuration;
or, indicated by defining a new RRC parameter or a DCI signaling.

Optionally, the transmitting the configured parameter to the UE includes:
transmitting, by the base station, the configured parameter to the UE through a radio resource control RRC signaling or a downlink control information DCI signaling.

The embodiments of the present disclosure provides a second method for processing a signal, including: configuring, by a base station, a transmission manner to transmit an unlicensed carrier discovery reference signal DRS: a CSI-RS in an unlicensed carrier DRS for RRM measurement being transmitted by using a single port configuration by default; and a CSI-RS in an unlicensed carrier DRS for CSI measurement or interference measurement being transmitted by using a single/multi-port in a non-periodic manner.

Optionally, the transmitting the single/multi-port CSI-RS in the unlicensed carrier DRS by using the non-periodic manner includes:
transmitting the CSI-RS in the unlicensed carrier DRS in data transmission by using a single/multi-port configuration for CSI measurement; and when the unlicensed carrier DRS is separately transmitted in other cases, transmitting the CSI-RS in the unlicensed carrier DRS by using a single-port configuration by default; or,
transmitting the single/multi-port CSI-RS in the unlicensed carrier DRS by using a non-periodic manner being not limited in data transmission.

Optionally, a port configuration of the single/multi-port CSI-RS in the unlicensed carrier DRS is consistent with a physical port and/or a logical port for data transmission.

Optionally, the single/multi-port CSI-RS in the unlicensed carrier DRS is configured with a transmission parameter in advance, and transmission is triggered at a time point needing transmission; or, the single/multi-port CSI-RS in the unlicensed carrier DRS is configured with a parameter when transmission is triggered.

Optionally, a configuration of the single/multi-port CSI-RS for CSI measurement in the unlicensed carrier DRS is the same as a configuration of a single-port CSI-RS only for RRM measurement.

Optionally, the method further includes: notifying, by the base station, information about that the single port or the single/multi-port is adopted by the CSI-RS in the unlicensed carrier DRS, and/or parameters such as the CSI-RS port number, and/or information whether the CSI-RS is triggered to be transmitted in the DRS, to a UE through a RRC signaling or a downlink DCI.

The embodiments of the present disclosure provide a third method for processing a signal, including: for a conventional CSI-RS, adopting, by a base station, a manner compatible with a DRS in an unlicensed carrier to limit a configuration manner and/or a transmission manner of the conventional CSI-RS;
wherein, the conventional CSI-RS is a CSI-RS that is not a composition signal of the DRS. Optionally, the conventional CSI-RS is transmitted in a non-periodic manner; and
the transmission manner compatible with the DRS in the unlicensed carrier includes: a time point for transmitting the conventional CSI-RS being within a DRS subframe or DMTC, and the conventional CSI-RS being transmitted along with the unlicensed carrier DRS.

Optionally, the conventional CSI-RS is transmitted in the DRS subframe or transmitted in an adjacent subframe after the DRS subframe; and
a blank symbol between the conventional CSI-RS and the DRS subframe is filled with a seizure signal to reserve a channel use right.

Optionally, the method further includes: notifying following information to the UE through a RRC signaling or a downlink DCI:
whether the conventional CSI-RS is triggered to be transmitted, and/or port information of the conventional CSI-RS, and/or configuration information of the conventional CSI-RS, and/or time for transmitting the conventional CSI-RS.

Optionally, the conventional CSI-RS is transmitted in an occasion period;
when the conventional CSI-RS and the unlicensed carrier DRS are transmitted in the same subframe, the configuration manner compatible with the DRS in the unlicensed carrier includes:
the conventional CSI-RS avoiding the CSI-RS configuration in the unlicensed carrier DRS; or,
the conventional CSI-RS avoiding configurations transmitted on symbols 5 and 6 in the subframe; or,
the conventional CSI-RS avoiding the CSI-RS configuration in the unlicensed carrier DRS and avoiding configurations transmitted on symbols 5 and 6 in the subframe; or,
the conventional CSI-RS being configured to transmit on different symbols in the subframe same as the DRS; and
the transmission manner compatible with the DRS in the unlicensed carrier includes:
not transmitting the conventional CSI-RS in the DRS subframe or a DMTC occasion; or,
not transmitting the conventional CSI-RS on a resource element or a resource block, or an OFDM symbol occupied by the unlicensed carrier DRS.

Optionally, the not transmitting the conventional CSI-RS on the resource element, or the time-frequency resource occupied by the unlicensed carrier DRS includes:
not transmitting the conventional CSI-RS on a symbol occupied by a PSS/SSS in the unlicensed carrier DRS;or,
not transmitting the conventional CSI-RS on a resource element occupied by the PSS/SSS in the unlicensed carrier DRS; or,
not transmitting the conventional CSI-RS on a resource block occupied by the PSS/SSS in the unlicensed carrier DRS; or,
not transmitting the conventional CSI-RS on a symbol occupied by a CSI-RS in the unlicensed carrier DRS;or,
not transmitting the conventional CSI-RS on a resource element occupied by the CSI-RS in the unlicensed carrier DRS.

The embodiments of the present disclosure provide a fourth method for processing a signal, including: configuring, by a base station, a first parameter for transmitting an unlicensed carrier discovery reference signal DRS, and issuing the configured parameter to a UE;
wherein, the first parameter includes a DRS occasion offset, and/or a DRS occasion number, and/or DRS occasion position information, and/or a DRS period;
and/or,
configuring, by the base station, a second parameter for transmitting the unlicensed carrier discovery reference signal DRS, and issuing the configured parameter to the UE;
wherein, the second parameter includes a CSI-RS in the unlicensed carrier DRS for RRM measurement, which is transmitted by using a single port configuration by default; and a CSI-RS in an unlicensed carrier DRS for CSI measurement or interference measurement, which is transmitted by using a single/multi-port in a non-periodic manner.

Optionally, the configuring the first parameter is described in any one of claims 2 to 7; and the configuring the second parameter is described in any one of claims 9 to 13.

The embodiments of the present disclosure provide a fifth method for processing a signal, wherein when a CSI-RS in a DRS collides or coincides with a conventional CSI-RS, or is transmitted with the conventional CSI-RS on the same symbol, the method includes:
performing, by a UE, CSI measurement according to the CSI-RS in the DRS and/or the conventional CSI-RS.

Optionally, the performing, by the UE, the CSI measurement according to the CSI-RS in the DRS specifically includes:
performing, by the UE, the CSI measurement according to a CSI-RS in the DRS transmitted in a non-periodic manner.

Optionally, the performing, by the UE, the CSI measurement according to the conventional CSI-RS specifically includes:
performing, by the UE, the CSI measurement according to a CSI-RS transmitted in an occasion period.

The embodiments of the present disclosure provide a sixth method for processing a signal, wherein a base station configures a transmission manner for a SSS in an unlicensed carrier DRS in each sub frame to be:
SSS sequences on individual subframes in one radio frame being all different, or the same partially.

Optionally, when the SSS sequences on individual subframes in one radio frame are all different, the method includes:
generating new sequences based on a SSS sequence on an existing subframe 0, and/or based on a SSS sequence on an existing subframe 5, so that the SSS sequences in individual subframes are all different; or,
redesigning news SSS sequences, so that the SSS sequences on individual subframes are all different.

Optionally, when the SSS sequences on individual subframes in one radio frame are the same partially, the method includes:
using the same SSS sequence as that on the existing subframe 0 as SSS sequences in unlicensed carrier DRS on a subframe 0 to a subframe 9 in one radio frame; or,
using the same SSS sequence as that on the existing subframe 5 as the SSS sequences in the unlicensed carrier DRS on a subframe 0 to a subframe 9 in one radio frame.

Optionally, when the SSS sequences on individual subframes in one radio frame are the same partially, the method includes:
using the same SSS sequence as that on the existing subframe 0 as SSS sequences in the unlicensed carrier DRS on a subframe 0 to a subframe 4 in one radio frame; or,
using the same SSS sequence as that on the existing subframe 5 as the SSS sequences in the unlicensed carrier DRS on a subframe 5 to a subframe 9 in one radio frame.

Optionally, the base station transmits a mode indication signaling to the UE through a RRC signaling or a downlink DCI signaling;
wherein, the mode indication is used to indicate a transmission mode of the SSS sequence.

The embodiments of the present disclosure provide a seventh method for processing a signal, including: configuring, by a base station, a discovery reference signal measurement time configuration DMTC and a RSSI measurement time configuration RMTC for a UE; and performing, by the UE, RSSI measurement on a corresponding resource according to the RMTC configured by the base station.

Optionally, the configuring, by the base station, the DMTC and the RMTC for the UE includes: configuring, by the base station, the DMTC for the UE, and configuring the RMTC for the UE based on the DMTC;
wherein, the configuring, by the base station, the DMTC for the UE includes: a DMTC periodicity, a DMTC subframe offset, and duration.

Optionally, the configuring the RMTC for the UE based on the DMTC includes:
configuring a RMTC period to be equal to the DMTC periodicity, or a divisor or multiple of the DMTC periodicity; and
configuring a RMTC subframe offset to be equal to the DMTC subframe offset or to be offset by k subframes based on the DMTC subframe offset.

Optionally, the method further includes: measuring, by the UE, on an average size of each layer 1 to obtain a RSSI value, wherein:
if an OFDM symbol or subframe within the average size of a certain layer 1 contains the DRS, then the RSSI measurement does not include this subframe and/or OFDM symbol, or the RSSI measurement is not performed on the average size of the current layer 1.

Optionally, the method further includes: reporting, by the UE, the RSSI value obtained by performing measurement on the average size of each layer 1; or, performing a statistics on the RSSI values obtained by performing measurement on the average size of the layer 1 included within a plurality of measurement duration and reporting a statistic result; the statistic quantity including:
an average RSSI value obtained by performing moving average on the RSSI values within the plurality of measurement duration; and/or,
a channel occupancy rate representing that a channel is occupied/a channel is busy when the RSSI value is greater than a certain threshold; and/or,
a busy-idle ratio of a channel busy time intercepted by a node to a calculated difference (an observation time - the channel busy time intercepted by the node - channel time occupied by the node); and/or,
a duty ratio of the channel time occupied by the node to the calculated difference (an observation time - a channel busy time intercepted by the node - the channel time occupied by the node).

The embodiments of the present disclosure provide a first base station which includes a first configuration module and a first transmission module, wherein
the first configuration module is adapted to configure a parameter for transmitting an unlicensed carrier DRS, wherein the parameter for transmitting an unlicensed carrier DRS includes: a DRS occasion offset, and/or a DRS occasion number, and/or DRS occasion position information, and/or a DRS period; and
the first transmission module is adapted to transmit the configured parameter to a UE.

Optionally, when the parameter includes the DRS occasion offset, the DRS occasion is an offset of a DRS occasion position to be transmitted relative to a DRS measurement timing configuration DMTC occasion initial position or a preset initial position.

Optionally, when the parameter includes the DRS occasion number, the DRS occasion number is a number of DRS occasions to be transmitted within a preset period, or within a DRS transmission window, or within a configured DMTC, or within a measurement gap GAP.

Optionally, the DRS occasion number is indicated by reusing a licensed carrier DRS duration parameter ds-OccasionDuration
or, is indicated by defining a new RRC parameter or a DCI signaling.

Optionally, the first transmission module is specifically adapted to: transmit the configured parameter to the UE through a radio resource control RRC signaling or a downlink control information DCI signaling.

The embodiments of the present disclosure provide a second base station, including a second configuration module and a second transmission module, wherein
the second configuration module is adapted to configure a transmission manner to transmit an unlicensed carrier discovery reference signal DRS, wherein a CSI-RS in an unlicensed carrier DRS for RRM measurement is transmitted by using a single port configuration by default; and a CSI-RS in an unlicensed carrier DRS for CSI measurement or interference measurement is transmitted by using a single/multi-port in a non-periodic manner; and
the second transmission module is adapted to transmit the configured parameter to a UE. Optionally, the CSI-RS in an unlicensed carrier DRS for RRM measurement is transmitted by using a single port configuration by default; and
the CSI-RS in the unlicensed carrier DRS for CSI measurement or interference measurement is transmitted by using a single/multi-port in a non-periodic manner.

Optionally, the transmitting the CSI-RS in the unlicensed carrier DRS by using the single/multi-port non-periodic manner includes:
transmitting the CSI-RS in the unlicensed carrier DRS in data transmission by using a single/multi-port configuration for CSI measurement; and when the unlicensed carrier DRS is separately transmitted in other cases, transmitting the CSI-RS in the unlicensed carrier DRS by using a single-port configuration by default; or,
transmitting the single/multi-port CSI-RS in the unlicensed carrier DRS by using a non-periodic manner being not limited to data transmission.

Optionally, a port configuration of the single/multi-port CSI-RS in the unlicensed carrier DRS is consistent with a physical port and/or a logical port for transmitting the data.

Optionally, the single/multi-port CSI-RS in the unlicensed carrier DRS is configured with a transmission parameter in advance, and transmission is triggered at a time point needing transmission; or, the single/multi-port CSI-RS in the unlicensed carrier DRS is configured with a parameter when transmission is triggered.

Optionally, a configuration of the single/multi-port CSI-RS for CSI measurement in the unlicensed carrier DRS is the same as a configuration of a single-port CSI-RS only for RRM measurement.

Optionally, the second transmission module is specifically adapted to: notify parameters such as single port or single/multi-port information adopted by the CSI-RS in the unlicensed carrier DRS, and/or CSI-RS port number, and/or whether the CSI-RS is triggered to transmit information in the DRS to a UE through a RRC signaling or a downlink DCI.

The embodiments of the present disclosure provide a third base station, including a third configuration module and a third transmission module, wherein
the third configuration module is adapted to, for a conventional CSI-RS, adopt a manner compatible with a DRS in an unlicensed carrier to limit a configuration manner and/or a transmission manner of the conventional CSI-RS by the base station; wherein, the conventional CSI-RS is a CSI-RS that is not a composition signal of the DRS; and
the third transmission module is adapted to transmist the configured conventional CSI-RS. Optionally, the conventional CSI-RS is transmitted in a non-periodic manner.

The third configuration module is specifically adapted to:
transmit the conventional CSI-RS along with the unlicensed carrier DRS, wherein a time point for transmitting the conventional CSI-RS is within a DRS subframe or DMTC.

Optionally, the conventional CSI-RS is transmitted in the DRS subframe or transmitted in an adjacent subframe after the DRS subframe; and
a blank symbol between the conventional CSI-RS and the DRS subframe is filled with a seizure signal to reserve a channel use right.

Optionally, the third transmission module is specifically adapted to: notify following information to the UE through a RRC signaling or a downlink DCI:
whether the conventional CSI-RS is triggered to transmit, and/or port information of the conventional CSI-RS, and/or configuration information of the conventional CSI-RS, and/or time for transmitting the conventional CSI-RS.

Optionally, the conventional CSI-RS is transmitted in an opportunity period;
when the conventional CSI-RS and the unlicensed carrier DRS are transmitted in the same sub frame, the configuration manner compatible with the DRS in the unlicensed carrier includes: the conventional CSI-RS avoiding the CSI-RS configuration in the unlicensed carrier DRS; or, the conventional CSI-RS avoiding configurations transmitted on symbols 5 and 6 in the subframe; or,
the conventional CSI-RS avoiding the CSI-RS configuration in the unlicensed carrier DRS and avoiding the configurations transmitted on the symbols 5 and 6 in the subframe; or,
the conventional CSI-RS being configured to transmit on different symbols in the subframe same as the DRS; and
the transmission manner compatible with the DRS in the unlicensed carrier includes:
   not transmitting the conventional CSI-RS in the DRS subframe or a DMTC occasion; or,
   not transmitting the conventional CSI-RS on a resource element or a resource block, or an OFDM symbol occupied by the unlicensed carrier DRS.

Optionally, the not transmitting the conventional CSI-RS on the resource element, or the time-frequency resource occupied by the unlicensed carrier DRS includes:
not transmitting the conventional CSI-RS on a symbol occupied by a PSS/SSS in the unlicensed carrier DRS;or,
not transmitting the conventional CSI-RS on a resource element occupied by the PSS/SSS in the unlicensed carrier DRS; or,
not transmitting the conventional CSI-RS on a resource block occupied by the PSS/SSS in the unlicensed carrier DRS; or,
not transmitting the conventional CSI-RS on a symbol occupied by a CSI-RS in the unlicensed carrier DRS;or,
not transmitting the conventional CSI-RS on a resource element occupied by the CSI-RS in the unlicensed carrier DRS.

The embodiment of the present disclosure provides a fourth base station, including a third configuration module and a fourth transmission module, wherein
the fourth configuration module is adapted to configure a first parameter for transmitting an unlicensed carrier discovery reference signal DRS; wherein, the first parameter includes a DRS occasion offset, and/or a DRS occasion number, and/or DRS occasion position information, and/or a DRS period;
and/or,
configure a second parameter for transmitting the unlicensed carrier discovery reference signal DRS; wherein, the second parameter includes a CSI-RS in the unlicensed carrier DRS for RRM measurement, which is transmitted by using a single port configuration by default; and a CSI-RS in an unlicensed carrier DRS for CSI measurement or interference measurement, which is transmitted by using a single/multi-port non-periodic manner; and
the fourth transmission module is adapted to transmit the configured parameter to the UE. Optionally, the configuring the first parameter is as described above; and the configuring the second parameter is as described above.

The embodiment of the present disclosure provides a UE, which includes a processing module adapted to, when a CSI-RS in a DRS collides or coincides with a conventional CSI-RS, or is transmitted with the conventional CSI-RS on the same symbol, perform CSI measurement according to the CSI-RS in the DRS and/or the conventional CSI-RS.

Optionally, when the UE performs CSI measurement according to the CSI-RS in the DRS, the processing module is specifically adapted to:
perform, by the UE, the CSI measurement according to a CSI-RS in the DRS transmitted in a non-periodic manner.

Optionally, when the UE performs CSI measurement according to the CSI-RS in the conventional CSI-RS, the processing module is specifically adapted to:
perform, by the UE, the CSI measurement according to a CSI-RS transmitted in an occasion period.

The embodiment of the present disclosure provides a fifth base station, which includes a sixth configuration module adapted to configure a transmission manner for a SSS in an unlicensed carrier DRS in each subframe to be: SSS sequences on each subframe in one radio frame being all different, or the same partially.

Optionally, when the SSS sequences on each subframe in one radio frame are all different, the sixth configuration module is specifically adapted to:
generate new sequences based on SSS sequences in the existing subframe 0, and/or based on SSS sequences in the existing subframe 5, so that the SSS sequences in each subframe are all different; or,
redesign news SSS sequences, so that the SSS sequences on each subframe are all different.

Optionally, when the SSS sequences on each subframe in one radio frame are the same partially, the sixth configuration module is specifically adapted to:
use the same SSS sequences as that on the existing subframe 0 as SSS sequences in unlicensed carriers DRS on a subframe 0 to a subframe 9 in one radio frame; or,
use the same SSS sequences as that on the existing subframe 5 as the SSS sequences in the unlicensed carriers DRS on a subframe 0 to a subframe 9 in one radio frame.

Optionally, when the SSS sequences on each subframe in one radio frame are the same partially, the sixth configuration module is specifically adapted to:
use the same SSS sequences as that on the existing subframe 0 as SSS sequences in unlicensed carriers DRS on a subframe 0 to a subframe 4 in one radio frame; or,
use the same SSS sequences as that on the existing subframe 5 as the SSS sequences in the unlicensed carriers DRS on a subframe 5 to a subframe 9 in one radio frame.

Optionally, a sixth transmission module is further included, which is adapted to transmit a mode indication signaling to the UE through a RRC signaling or a downlink DCI signaling; wherein, the mode indication is used to indicate a transmission mode of the SSS sequence.

The embodiment of the present disclosure provides a sixth base station, including a seventh configuration module and a seventh transmission module, wherein
the seventh configuration module is adapted to configure a discovery reference signal measurement time configuration DMTC and a RSSI measurement time configuration RMTC for a UE; and
the seventh ransmission module is adapted to transmit the configured information to the UE, so that the UE performs RSSI measurement on a corresponding resource according to the RMTC configured by the base station.

Optionally, the seventh transmission module is specifically adapted to:
configure the DMTC for the UE, and configure the RMTC for the UE based on the DMTC;
The configuring, by the base station, the DMTC for the UE includes: a DMTC periodicity, a DMTC subframe offset, and duration.

Optionally, the configuring the RMTC for the UE based on the DMTC includes:
configuring the RMTC period to be equal to the DMTC periodicity, or a divisor or multiple of the DMTC periodicity; and
configuring the RMTC subframe offset to be equal to the DMTC subframe offset or to be offset by k subframes based on the DMTC subframe offset.

Optionally, the seventh transmission module is specifically adapted to: transmit the configured information to the UE, so that the UE counts and reports a RSSI value obtained by measuring an average size of each layer 1.

Optionally, the counted quantity includes:
an average RSSI value obtained by performing moving average on the RSSI values within measurement duration; and/or,
a channel occupancy rate representing that a channel is occupied/a channel is busy when the RSSI value is greater than a certain threshold; and/or,
a busy ratio of a channel busy time intercepted by a node to a calculated difference (observation time - channel busy time intercepted by the node - channel time occupied by the node); and/or,
a duty ratio of the channel busy time intercepted by the node to the calculated difference (observation time - channel busy time intercepted by the node - channel time occupied by the node).

The embodiments of the present disclosure also provide a computer readable storage medium storing a computer-executable instruction, wherein the computer-executable instruction is adapted to execute any of the method for processing a signal above.

The configuration and transmission of the DRS in the unlicensed carrier are implemented through the technical solution provided by the embodiments of the present disclosure.

Other features and advantages of the embodiments of the invention will be elaborated in the following description, and will be partially obvious from the description, or may be learned by practice of the invention. The objectives and other advantages of the invention may be realized and attained by the structure particularly pointed out in the description, claims, and the appended drawings.

Other aspects will become apparent upon reading and understanding the drawings and detailed description.

### BRIEF DESCRIPTION OF THE DRAWINGS

The accompanying drawings illustrated here serve to provide a further understanding of the present disclosure and constitute a part of the present application, and the illustrative embodiments of the present disclosure together with the description thereof serve to explain the present disclosure, and do not constitute an inappropriate defination to the present disclosure. In the drawings:
Fig. 1 is a schematic diagram of parameters of a DMTC in an existing Rel-12 DRS measurement;
Fig. 2 is a flow chart of an embodiment of a method for processing a signal according to the embodiments of the present disclosure;
Fig. 3 is a schematic diagram of a DRS occasion offset according to the embodiments of the present disclosure;
Fig. 4 is a schematic diagram of a DRS occasion number according to the embodiments of the present disclosure;
Fig. 5 is a schematic diagram of DRS occasion position information according to the embodiments of the present disclosure;
Fig. 6 is a flow chart of a first embodiment for implementing configuration and transmission of a CSI-RS according to the embodiments of the present disclosure;
Fig. 7 is a schematic diagram of an embodiment of a transmission manner of a CSI-RS in an unlicensed carrier DRS according to the embodiments of the present disclosure;
Fig. 8 is a schematic diagram of an embodiment of another transmission manner of the CSI-RS in the unlicensed carrier DRS according to the embodiments of the present disclosure;
Fig. 9 is a schematic diagram of an embodiment of another transmission manner of the CSI-RS in the unlicensed carrier DRS according to the embodiments of the present disclosure; and
Fig. 10 is a schematic diagram of a composition structure of a base station according to the embodiments of the present disclosure.

### DETAILED DESCRIPTION

To make the objectives, technical solutions, and advantages of the present disclosure clearer, the following further describes the embodiments of the present disclosure in detail with reference to the accompanying drawings. It should be noted that, in case of no conflict, the embodiments in the present application and the features in the embodiments may be arbitrarily combined with each other.

Without special statement, unless a DRS precedes a special prefix or description, such as a licensed carrier or Rel-12, all the DRSs herein refer to DRSs in an unlicensed carrier, i.e., unlicensed carrier DRSs. A LAA system is taken as a typical application of an unlicensed carrier system for description herein, and is not used to limit the application scenario of the technical solution herein. That is to say, the technical solution provided by the embodiments of the present disclosure is applicable to all unlicensed carrier systems, and is not limited to the LAA system.

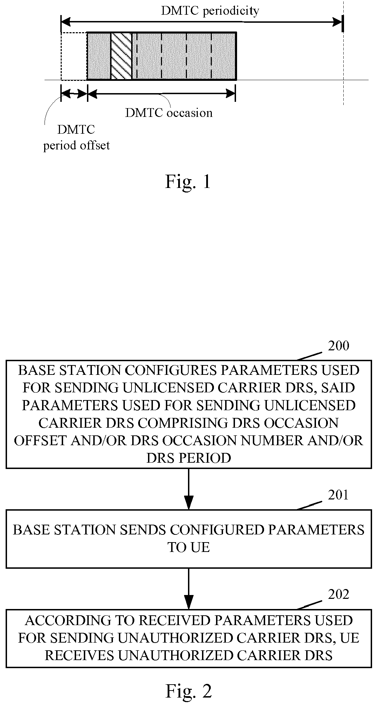

Fig. 1 is a schematic diagram of parameters of a DMTC in existing Rel-12 DRS measurement. As shown in Fig. 1, Rel-12 DRS (defined with respect to a licensed carrier) measurement mainly relates to several parameters of a DRS Measurement Timing Configuration (DMTC):
a DMTC periodicity, wherein the DMTC periodicity of the Rel-12 DRS may be 40ms, 80ms or 160ms;
a DMCT period offset, wherein the DMTC period offset of the Rel-12DRS ranges from 0 to period minus 1. For example, if the DMTC periodicity is 40ms, then the DMTC period offset ranges from 0ms to 39ms; and
a DMTC occasion, wherein the DMTC occasion is 6ms, which is equal to a duration of one measurement gap (Measurement GAP).

In addition, the Rel-12 specifies that the duration of the licensed carrier DRS ranges from 1 ms to 5 ms (for FDD), or from 2 ms to 5 ms (for TDD).

In a LTE licensed carrier scenario, a UE receives a parameter of the Rel-12 DMTC and may perform DRS measurement within 6 ms range (which is determined according to the DMTC periodicity and offset) corresponding to the DTMC occasion. The DMTC parameters and DRS durations of all cell in the same frequency layer are the same.

The unlicensed carrier system and the UE may follow a configuration manner of the Rel-12 DRS DMTC, or modify the Rel-12 DRS DMTC configuration (for instance, the period, the DTMC duration, etc.), or use an entirely new measurement parameter, which is not limited in the embodiment of the present disclosure.

For the unlicensed carrier system, since neighboring stations belonging to different operators may use the same carrier to transmit, these stations may compete the carrier to transmit the DRS at the same time, which may result in that a SINR is too low, thereby causing errors in UE detection and measurement. Meanwhile, one DRS occasion duration of the unlicensed carrier may be less than or equal to 1 ms (such as 12 OFDM symbols). The inventor believes that in one DTMC occasion (for example, the Rel-12 DRS occasion is 6ms), the measurement accuracy may be improved by transmitting a plurality of DRSs. Therefore, it is necessary to provide a method for configuring multi-cell DRS transmission in an unlicensed carrier, including: configuring, by a base station, a parameter for transmitting an unlicensed carrier DRS, and transmitting the configured parameter to a UE; wherein, the parameter includes a DRS occasion offset, and/or a DRS occasion number, and/or DRS occasion position information, and/or a DRS period. In this way, the UE may perform related cell detection, synchronization and/or RRM measurement functions according to the received parameter.

Fig. 2 is a flow chart of an embodiment of a method for processing a signal according to the embodiments of the present disclosure. As shown in Fig. 2, the method includes the following steps.

In step 200, a base station configures a parameter for transmitting an unlicensed carrier DRS, wherein the parameter for transmitting an unlicensed carrier DRS includes: a DRS occasion offset, and/or a DRS occasion number, and/or DRS occasion position information, and/or a DRS period.

### (1) DRS occasion offset.

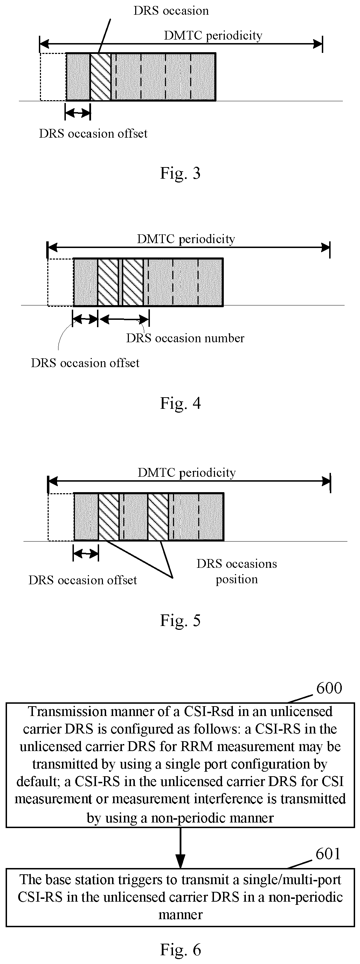

The DRS occasion may be an offset of a DRS occasion position to be transmitted (whether the position is successfully transmitted further depends on a LBT result) relative to a DMTC occasion initial position or other preset initial position, as shown in Fig. 3, which is a schematic diagram of the DRS occasion offset according to the embodiment of the present disclosure.

In an example, the DRS occasion offset may be an offset relative to a DMTC initial position or a measurement gap (measurement GAP) initial position. The DMTC initial position is determined by the DMTC periodicity and the DMTC offset.

More specifically, the DRS occasion offset may further be a DRS occasion subframe offset, and/or a DRS occasion symbol offset. A unit of the former offset is a subframe, and a unit of the latter offset is a symbol. If a pattern of the DRS or other factor restricts the DRS to be transmitted in subframe alignment, the DRS occasion symbol offset may not be configured. For example: when the DRS occasion offset refers to the DRS occasion subframe offset and the DRS occasion symbol offset, such as: offset by two subframes, two symbols; if the DRS occasion offset is transmitted in subframe alignment, then the DRS occasion offset is the DRS occasion subframe offset. If the DRS occasion offset is transmitted as symbol offset, then the offset may be the DRS occasion symbol offset, for example, offset by 13 symbols or 20 symbols.

A value range of the DRS occasion offset is limited by a number of possible positions of the DRS occasion. For example, if the DRS occasion has six possible positions in one DMTC (corresponding to six subframes or 6ms), then the DRS subframe offset ranges from 0 to 5ms or five subframes.

Different DRS occasion offsets may be set in different cells, that is, different cells may compete for resources to transmit DRSs at different time points or subframes, so as to avoid colliding with each other.

### (2) DRS occasion number.

The DRS occasion number refers to a number of DRS occasions to be transmitted within a preset period, or within a DRS transmission window, or within a configured DMTC, or within a measurement GAP.

In an example, the DRS occasion number may be a number of DRS occasions within the configured DMTC or within the measurement gap, as shown in Fig. 4, which is a schematic diagram of the DRS occasion number according to the embodiment of the present disclosure. Taking the configured DMTC as an example, it is assumed that the DMTC occasion is 6ms, and one DRS occasion duration is 12 OFDM symbols. The base station may configure one DRS occasion, two DRS occasions, or more DRS occasions in one DMTC. If the DRS is transmitted in subframe alignment, a maximum number of the DRS occasions in each DMTC may be six. If time for switching Automatic Gain Control (AGC), tuning, and Radio Frequency (RF) is taken into consideration, the maximum number of the DRS occasions in each DMTC may be five. The configured DRS occasion number may be a number of times that the base station plans to transmit the DRS; or, a number of times for performing LBT so as to transmit the DRS; or, may also be a maximum number of times that the base station plans to transmit the DRS successfully.

Here, the configured DMTC is still taken as an example, it is assumed that the DRS occasion number configured by the base station is two, and there are five candidate positions available for DRS transmission in the DMTC. At this time, if the DRS offset and the position information configuration of the DRS occasion are not considered, the configuring the DRS occasion number may include the following steps.

For the case that the DRS occasion number is the number of times that the base station plans to send the DRS, the base station will attempt to send the DRS at a position 1 and a position 2; no matter whether the DRS is successfully transmitted (for example, the DRS is successfully transmitted for zero times, or once or twice) finally, the base station will not send or attempt to send the DRS within the DMTC periodicity.

For the case that the DRS occasion number is the maximum number of times that the base station plans to transmit the DRS successfully, the base station will attempt to send the DRS at the position 1; if the DRS is successfully transmitted, the base station will continuously attempt to send the DRS at the position 2; if the DRS is successfully transmitted, then the base station will not send or attempt to send the DRS within the DMTC. If the base station does not successfully transmit the DRS at the position 2 because a LBT result is busy, then the base station continously attempts to send the DRS at a position 3 until the DRS is successfully transmitted twice within the DMTC, or the DRS has been attempted to be sent at all positions in the DMTC periodicity completely. Or, the base station attempts to send the DRS at the position 1, if a LBT channel is idle, then the DRS is sent successfully. At this time, the DRS may be directly transmited at the position 2 without performing LBT at the position, but a seizure signal needs to be transmitted at an idle symbol or a duration between the position 1 and the position 2. One position here may be understood as one millisecond or one subframe (14 symbols). The DRS occupies 12 symbols, so there are two blank symbols left in one position. If a seizure signal is not filled, the unlicensed carrier during this blank time will be occupied by other devices.

When transmitting the DRSs at multiple consecutive positions, it is possible to only perform LBT before the first position, and seizure signals or other useful/unuseful information may be filled among the DRSs transmitted at multiple consecutive positions. However, the maximum duration for transmitting the DRS may not exceed the maximum transmission duration for a country or region-controlled sequence. For example, LBT is performed before the position 1, a result is that a channel is idle, and the DRS is transmitted successfully at the position 1. If the configured DRS occasion number is 3, then the DRS may be directly transmitted without performing LBT before the position 2 and the position 3. However, there may be transmission blanks between the DRSs transmitted on the positions 1, 2, and 3, so it is necessary to transmit the seizure signal or information.

It is also possible to perform LBT before each DRS occasion is transmitted, and the base station may transmit the DRS occasion only after the LBT is successful.

Further, the DRS occasion number may be indicated by reusing a licensed carrier DRS duration parameter ds-OccasionDuration; or, the above parameter may also be indicated by defining a new RRC parameter or DCI signalling. For example, a new parameter "DRS-OccasionNum" may be defined to indicate the DRS occasion number. The details are as follows.

The DRS occasion number may be expressed and transferred through Rel-12 DRS occasion duration (1ms/2ms to 5ms). In a 3GPP RANI Rel-12 protocol, the DRS occasion duration is indicated by a parameter ds-OccasionDuration, and the value of the DRS occasion duration ranges from 1/2 to 5, which respectively indicates that the DRS occasion duration is one subframe to five subframes (FDD), or two subframes to five subframes (TDD). Unlike the Rel-12 licensed carrier DRS, the DRS occasion duration in the unlicensed carrier is a fixed value, such as 12 OFDM symbols or one sub frame length, but the parameter ds-OccasionDuration may be reused to indicate the DRS occasion number. Further, the parameter may range from 1 to 5, or 1 to 6. For example, if the ds-OccasionDuration is set as 3, then it indicates that the DRS occasion number of the unlicensed carrier is 3 (in Rel-12, it represents that the DRS occasion duration is three subframes).

Or, a new RRC parameter or DCI signaling may also be defined to indicate the above parameter. For example, a new parameter "DRS-OccasionNum" may be defined to indicate the number of the DRS occasion. For instance, if the ds-OccasionDuration is set as 3, then it indicates that the DRS occasion number of the unlicensed carrier is 3 (in Rel-12, it represents that the DRS occasion duration is three subframes).

In addition, the cell may be set to find an opportunity to transmit one or more DRS occasions within one DMTC periodicity or one measurement GAP to enhance the performances of subsequent cell detection, synchronization and RRM measurement.

### (3) DRS occasion position information.

The DRS occasion position information refers to position information of the DRS occasions to be transmitted within a preset period, or within a DRS transmission window, or within a configured DMTC, or within a measurement GAP.

In an example, the DRS occasion position information may be DRS occasion position information within the configured DMTC periodicity or within the measurement GAP, as shown in Fig. 5, which is a schematic diagram of the DRS occasion position information according to the embodiment of the present disclosure.

The DRS occasion position information may be represented by a bitmap. Assuming that there are X possible transmission positions of the DRS occasion within each period, then the DRS occasion position information may be represented by Xbit bitmap. Value 1 in the bitmap indicates that the DRS needs to be transmitted (whether the DRS can be transmitted successfully needs to be determined according to the LBT result). Value 0 in the bitmap means no DRS is transmitted at the position.

Taking the configured DMTC as an example, it is assumed that the DMTC occasion is 6ms, and one DRS occasion duration is 12 OFDM symbols; and assuming that the duration of the DRS occasion plus LBT is 1ms in total, then if the DRS is transmitted in subframe alignment, there may be five or six transmission positions of the DRS occasion in one DMTC periodicity; and if time for switching AGC, tuning, and RF is considered, the maximum number of the DRS occasions in each DMTC may be five.

For example, if there are five DRS occasion positions within one DMTC periodicity, assuming that a cell 1 plans to send the DRS in a subframe 0 (or position 0), a subframe 3 (or position 3), and a subframe 4 (or position 4) in each DMTC periodicity; and a cell 2 plans to transmit the DRS on a subframe 1 (or position 1) and a subframe 2 (or position 2) within each DMTC; at this moment, the base station may notify information about the DRS transmission positions to the UE, and may further notify the information to a neighboring cell. For example, 5bit may be used to indicate the possible DRS transmission conditions on five positions, 1bit indicates that the cell may transmit the DRS at this position, and 0bit represents that the cell will not transmit the DRS at this position. Taking the above sample as an example, the DRS transmission position information of the cell 1 is 10011 (representing the condition of DRSs planned to be transmitted from the position 1 to the position 5 in sequence from left to right), and the DRS transmission position information of the cell 2 is 01100. In addition, 1bit only indicates that the cell may transmit the DRS at this position, and whether the DRS is successfully transmitted also depends on the LBT result.

### (4) DRS period.

The DRS period may be less than, greater than, or equal to the DMTC periodicity.

In an example, the DRS period is greater than or equal to the DMTC periodicity. For example, if the DMTC periodicity of the unlicensed carrier is 40ms, then a DRS period of a certain cell may be set as 40ms or 80ms. The DMTC periodicity is a frequency layer-specific parameter, that is, all cells in the same frequency layer are configured with the same DMTC periodicity of the unlicensed carrier DRS. The DRS period is a cell-specific parameter, and different cells may be configured with different DRS periods. The DRS period is actually a period of irregularly transmitting the DRS, that is, there are one or more possible DRS transmission opportunity points in one period, and the DRS may be transmited on one or more opportunity points therein. Therefore, the transmission period may actually be irregular.

It should be noted that the DMTC periodicity is defined mainly from a measurement perspective at the UE side, that is, the UE detects and measures the DRS in the specified DMTC duration every such a period; and the DRS period is mainly defined from a perspective of DRS transmission, i.e., the base station transmits the DRS every such a period, and the UE receives the DRS correspondingly.

In this step 200, the base station may configure only one of the above parameters, and may also configure any number or all of the parameters. For instance: the base station may only configure the DRS occasion offset. In this case, the base station and a terminal will default that the base station may try to send the DRS occasion number in the DMTC periodicity (the number is a determined one, multiple, or all possible positions in the DMTC periodicity). For another instance: the base station may only configure the DRS occasion number. In this case, the base station and the terminal will default that the base station may attempt to transmit the DRS from a DMTC initial position, or a preset initial position in the period, or a measurement GAP initial position, or the like.

In step 201, the base station transmits the configured parameter to the UE.

In this step, the configured parameter may be transmitted to the UE through a radio resource control (RRC) signaling or a downlink control information (DCI) signaling.

Further, this step may further include: transmitting the configured parameter to a neighboring cell through a wired or wireless manner. In this way, the neighboring cell may coordinate different DRS transmission parameters through the received parameter for transmitting an unlicensed carrier DRS, so as to avoid collisions or save the unlicensed carrier resources by multiplexing transmission.

Further, in order to reduce the expenses, in the embodiment of the present disclosure, the parameter for transmitting an unlicensed carrier DRS may be configured or transmitted by multiplexing some existing parameters, for instance: the DRS occasion number may be expressed and transferred through Rel-12 DRS occasion duration (1ms/2ms to 5ms). In a 3GPP RANI Rel-12 protocol, the DRS occasion duration is indicated by a parameter ds-occasionDuration, and the value of the DRS occasion duration ranges from 1/2 to 5, which respectively indicates that the DRS occasion duration is one subframe to five subframes (FDD), or two subframes to five subframes (TDD). Unlike the Rel-12 licensed carrier DRS, the DRS occasion duration in the unlicensed carrier is a fixed value, such as 12 OFDM symbols or one subframe length, but the parameter ds-OccasionDuration may be reused to indicate the DRS occasion number. Further, the parameter may range from 1 to 5, or 1 to 6. For instance, if the ds-OccasionDuration is set as 3, then it indicates that the DRS occasion number of the unlicensed carrier is 3 (in Rel-12, it represents that the DRS occasion duration is three subframes).

Or, a new RRC parameter or DCI signaling may also be defined to indicate the above parameter. For example, a new parameter "DRS-OccasionNum" may be defined to indicate the DRS occasion number.

In step 202, the UE receives the unlicensed carrier DRS according to the received parameter for transmitting an unlicensed carrier DRS, so as to perform related cell detection, synchronization and/or RRM measurement functions.

To be specific, the step includes the following: the UE obtains a DRS occasion offset and/or a DRS occasion number, and/or DRS occasion position information, and/or a DRS period of a corresponding cell according to the received RRC signaling or downlink DCI, so as to receive the unlicensed carrier DRS within the period and time point determined by the parameters, and perform detection and measurement functions.

Further,
the DRS of 3GPP Release-12 includes CRS, PSS/SSS, and configurable CSI-RS. The CSI-RS only uses a port 15 for RRM measurement. The CSI-RS in the DRS in an unlicensed carrier may use a single-port or a single/multi-port structure, and may also be used for RRM measurement and/or channel state information (CSI) measurement. Except the CSI-RS in the unlicensed carrier DRS, the base station may additionally configure a CSI-RS which is not a composition signal of the DRS, and is called a conventional CSI-RS for being distinguished from the CSI-RS in the DRS. The conventional CSI-RS may include two types, wherein the first type is a periodic CSI-RS, but since LBT causes non-strict periodic transmission, it may be called opportunity period transmission; and the other is a CSI-RS that is triggered to be transmitted in a non-periodic manner.

However, the related art neither gives a technical solution of how to configure the single-port and single-/multi-port CSI-RS in the unlicensed carrier DRS; nor provides a technical solution of how to solve the configuration conflicts between the CSI-RS in the unlicensed carrier DRS and the conventional CSI-RS (which is not a composition signal of the DRS), such as collision or configuration coincidence, or the like; moreover, the configuration conflicts between the multi-ports of the CSI-RS in the unlicensed carrier DRS and the conventional CSI-RS (which is not a composition signal of the DRS), such as collision or configuration coincidence, are not given either. Unless otherwise specified herein, the single/multi-port generally refers to a CSI-RS single-port or multi-port that may be used for CSI measurement or interference measurement, and the single-port generally refers to a CSI-RS port 15 that is used for RRM measurement. The method for configuring and transmitting CSI-RS in the unlicensed carrier DRS is further provided below.

Fig. 6 is a flow chart of a first embodiment for implementing configuration and transmission of a CSI-RS according to the embodiment of the present disclosure. As shown in Fig. 6, the flow includes the following steps.

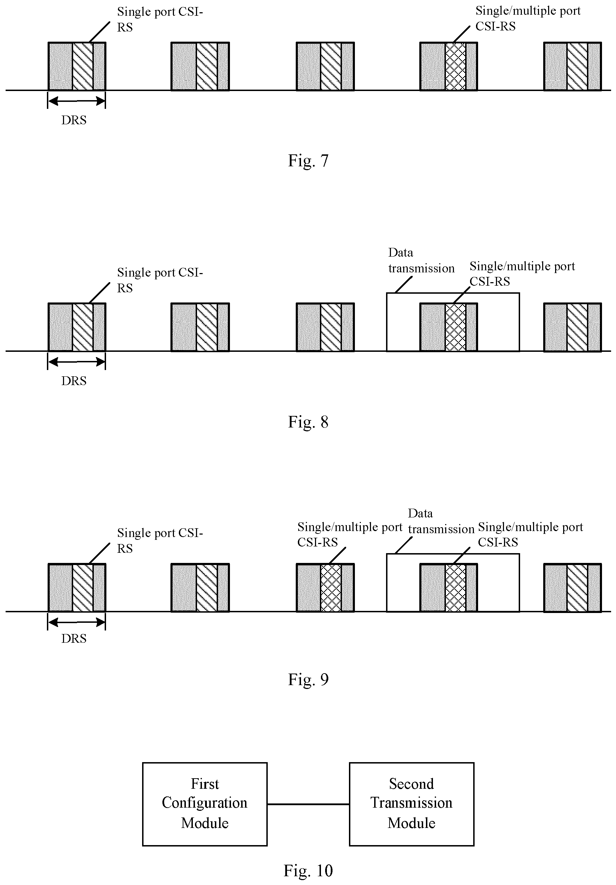

In step 600, a transmission manner of a CSI-RS in an unlicensed carrier DRS is configured as follows: a CSI-RS in an unlicensed carrier DRS for RRM measurement may be transmitted by using a single port configuration by default; and a CSI-RS in an unlicensed carrier DRS for CSI measurement or interference measurement is transmitted by using a non-periodic manner. Fig. 7 is a schematic diagram of an embodiment of a transmission manner of a CSI-RS in an unlicensed carrier DRS according to the embodiment of the present disclosure.

In this embodiment, an opportunity period transmission manner may be adopted for the unlicensed carrier DRS. The opportunity period transmission refers to that: a DMTC or a measurement GAP exists at a certain period, one or more candidate positions for transmitting the unlicensed carrier DRS exist in the DMTC or in the measurement GAP within each period, but whether the unlicensed carrier DRS is successfully transmitted at this or these candidate positions or not also depends on a LBT result. For example, as shown in Fig. 3, the unlicensed carrier DRS is essentially belonging to an opportunity period transmission manner.

If there is no additional configuration or restriction, the CSI-RS in the unlicensed carrier DRS transmitted in the opportunity period is transmitted by using a single port configuration by default for RRM measurement. The single-port transmission of the CSI-RS is also configurable, that is, if the CSI-RS is configured, then the CSI-RS is transmitted in the unlicensed carrier DRS in the opportunity period. If the CSI-RS is not configured, then the CSI-RS is not transmitted in the unlicensed carrier DRS. It is also possible to restrict that the CSI-RS in the unlicensed carrier DRS has to be transmitted, but the CSI-RS may be transmitted by using a single port or single/multi-port structure. It is also possible to restrict that a single-port pattern containing the CSI-RS has to be transmitted in the unlicensed carrier DRS, regardless of whether the CSI-RS is configured to be transmitted by using a single-port or single/multi-port structure.

The single/multi-port CSI-RS in the unlicensed carrier DRS is triggered or configured to be transmitted by using a non-periodic manner, and may also be used for CSI measurement or interference measurement. That is, the CSI-RS in the non-licensed carrier DRS is transmitted by using a single port structure by default. However, when CSI measurement or other purpose is required, the CSI-RS in the unlicensed carrier DRS is triggered to transmit by using a single/multi-period non-periodic manner.

Further,
the following several manners may be adopted for transmitting the single/multi-port CSI-RS in the unlicensed carrier DRS by using a non-periodic manner.

In a first manner, the CSI-RS in the unlicensed carrier DRS in data transmission (data transmission burst) may be used for CSI measurement and may be transmitted by using a single/multi-port configuration. When the unlicensed carrier DRS is separately transmitted in other cases without data transmission, the CSI-RS in the unlicensed carrier DRS is transmitted by using a single-port configuration by default. Fig. 8 is a schematic diagram of an embodiment of another transmission manner of a CSI-RS in an unlicensed carrier DRS according to the embodiment of the present disclosure.

In a second manner, the transmitting the single/multi-port CSI-RS in the unlicensed carrier DRS in a non-periodic manner may be performed in, but is not limited to be performed in, the data transmission burst; and the CSI-RS may be triggered to be transmitted in a non-periodic manner for CSI measurement both in and out the data transmission burst. For instance: when the base station has a data transmission request, it plans to seize a channel for data transmission after a certain period of time, or the unlicensed carrier DRS may preempt the channel in advance because of a high LBT priority. When the base station needs to perform CSI measurement in advance, the CSI-RS in the unlicensed carrier DRS may be triggered to transmit by using a single/multi-port configuration. As shown in Fig. 9, Fig. 9 is a schematic diagram of an embodiment of another transmission manner of a CSI-RS in an unlicensed carrier DRS according to the embodiment of the present disclosure.

Further, a port configuration of the single/multi-port CSI-RS in the unlicensed carrier DRS for CSI and interference measurement may be consistent with a physical port and/or a logical port for transmitting the data.

Further, the single/multi-port CSI-RS in the unlicensed carrier DRS may be configured with a transmission parameter (for example, a port number and other parameters) in advance, and is triggered to transmit at a time point needing transmission. In this way, signaling expenses are saved; or, the single/multi-port CSI-RS in the unlicensed carrier DRS may be configured with a parameter when transmission is triggered.

Further, the configuration of the single-cell/multi-port CSI-RS in the unlicensed carrier DRS for CSI measurement is the same as the configuration of the single-port CSI-RS for RRM measurement only, which facilitates the UE in neighboring cells to perform RRM measurement and transmission node TP identification according to a default DRS pattern. The CSI-RS configuration for CSI or interference measurement may use the same configuration as the single port CSI-RS for RRM measurement. For example, the two CSI-RS configurations are the same configurations in the 3GPP protocol 36.211 Table 6.10.5.2-1 (Table 6.10.5.2-1: Mapping from CSI reference signal configuration (*k*',*l*') to for normal cyclic prefix.), for example, both of them use a configuration 1, and/or a configuration 2, and/or a configuration 3, and/or a configuration 6, and/or a configuration 7, and/or a configuration 8, and/or one of configurations 12 to 17.

In step 601, the base station triggers to transmit the single/multi-port CSI-RS in the unlicensed carrier DRS by using a non-periodic manner.

Further, this step further includes:
notifying, by the base station, information about that single port or single/multi-port is adopted by the CSI-RS in the unlicensed carrier DRS, and/or parameters such as the CSI-RS port number, and/or information about whether the CSI-RS is triggered to be transmitted in the DRS, to a UE through a RRC signaling or a downlink DCI.

As described in step 600, the base station may configure to transmit a single-port CSI-RS for RRM measurement. The base station may trigger the single/multi-port CSI-RS non-periodic transmission when there is data to be transmitted or is being transmitted or there is other CSI measurement or interference measurement requirement. Accordingly, the base station may further notify the information about that single port or single/multi-port is adopted by the CSI-RS in the unlicensed carrier DRS, and/or the parameters such as the CSI-RS port number, and/or the information about whether the CSI-RS is triggered to be transmitted, to the UE through the RRC signaling or the downlink DCI.

Since the CSI measurement is different from the RRM measurement, the non-periodic triggerred DRS information only needs to be notified to a UE of a serving cell, but does not need to be notified to a UE of a neighboring cell. That is to say, only those UEs that accept scheduling need to measure and report the CSI based on this, and the UEs of other neighboring cells only need to perform RRM measurement based on a normal periodic DRS.

In a second embodiment for implementing configuration and transmission of a CSI-RS according to the embodiments of the present disclosure,
for a conventional CSI-RS, the base station adopts a manner compatible with the DRS in the unlicensed carrier to limit a configuration manner and/or a transmission manner of the conventional CSI-RS. The conventional CSI-RS (which is not a composition signal of the DRS) may be transmitted in a non-periodic manner, and may be configured to be a single/multi-port for CSI measurement, interference measurement, and the like.

The transmission manner compatible with the DRS in the unlicensed carrier includes: a time point for transmitting the conventional CSI-RS in a non-periodic manner being a DRS subframe, a DRS time point or within a DMTC. That is, the conventional CSI-RS transmitted in a non-periodic manner may be transmitted along with the unlicensed carrier DRS. The conventional CSI-RS may be transmitted in the DRS subframe, or may be transmitted in an adjacent subframe after the DRS subframe, but a blank symbol between the conventional CSI-RS and the DRS subframe needs to be filled by a necessary seizure signal so as to reserve a channel use right, such as control information, reference signal, or other unknown signal.

It is particularly for the situation that the CSI-RS in the unlicensed carrier DRS adopts a single port configuration and is used for RRM measurement only. The conventional CSI-RS transmitted in a non-periodic manner (single/multi-port configuration) may be used to measure CSI and interference conditions, which improves a spectrum utilization efficiency of the unlicensed carrier. For instance: when the base station has a data transmission requirement, and planns to compete a channel to transmit data after a period of time, and when the DRS occasion is encountered and the channel use right is successfully preempted to transmit the DRS, the base station may trigger the conventional CSI-RS to be transmitted along with the DRS.

The conventional CSI-RS transmitted in a non-periodic manner may be transmitted in the DRS subframe, which includes two situations: the first situation is that the conventional CSI-RS may occupy the same symbol as a composition signal of the DRS; and the second situation is that the conventional CSI-RS may occupy different symbols from the composition signal of the DRS. For example, in the DRS subframe, the composition signal of the DRS occupies symbols 0 to 11, and the conventional CSI-RS occupies symbols 12 to 13, that is, the conventional CSI-RS transmitted in a non-periodic manner uses configurations 4, 9, 18, and/or 19, etc. in the 3GPP protocol 36.211 Table 6.10.5.2-1.

The conventional CSI-RS transmitted in a non-periodic manner may be triggerred to be transmitted in one or more adjacent subframes after the DRS subframe. In an example, the conventional CSI-RS is transmitted in a first subframe after the DRS subframe. For instance: the DRS is transmitted in a subframe N, and the base station may trigger the conventional CSI-RS to be transmitted in a subframe (N+1).

The base station may trigger to transmit the conventional CSI-RS one or more times, that is, the base station triggers to transmit the conventional CSI-RS only once, or triggers to transmit the conventional CSI-RS and keeps N subframes (the N subframes may be continuous, or, spaced by one or more subframes), or triggers to transmit the conventional CSI-RS in a periodic manner. If the base station triggers to transmit the conventional CSI-RS several times at a time, it is only necessary to ensure that the first conventional CSI-RS is transmitted along with the unlicensed carrier DRS.

When the base station triggers to transmit the conventional CSI-RS in the DRS subframe or the DMTC in a non-periodic manner, the base station further nofity the following information to the UE through the RRC signaling or the downlink DCI: whether the conventional CSI-RS is triggered to be transmitted, and/or the conventional CSI-RS port information, and/or the conventional CSI-RS configuration information, and/or the conventional CSI-RS transmission time, etc.

If the unlicensed carrier DRS and the conventional CSI-RS are transmitted in the same subframe, collision or coincidence problem may occur. The conventional CSI-RS herein may be a single/multi-port CSI-RS (ie, not a composition signal of the DRS), as defined above. In the present embodiment, the conventional CSI-RS is transmitted in a periodic manner in particular (transmitting in the unlicensed carrier is also limited by the LBT, and is also the opportunity period transmission in fact). In order to avoid such a collision or coincidence problem, the embodiment of the present disclosure further provides a third embodiment for configurating and transmitting the conventional CSI-RS, including the follows.

The following configuration manners may be used.

In a first solution: the conventional CSI-RS should avoid the CSI-RS configuration in the unlicensed carrier DRS. For instance: the conventional CSI-RS only avoids the configuration adopted by the CSI-RS in the unlicensed carrier DRS; for another instance: the conventional CSI-RS avoids a configuration set that may be adopted by the CSI-RS in the unlicensed carrier DRS, that is, a configuration other than the configuration set is used to transmit the conventional CSI-RS.

For example, the CSI-RS in the unlicensed carrier DRS may use a configuration set {1, 2, 3, 6, 7, 8, 12-17} in the 3GPP protocol 36.211 Table 6.10.5.2-1 and/or other configurations (such as TDD CSI-RS configurations 20-31). If the CSI-RS in the unlicensed carrier DRS adopts the configuration 1, then the conventional CSI-RS may use other configurations than the configuration 1, or use configurations other than the configuration set described above.

If no CSI-RS is configured and transmitted in the unlicensed carrier DRS, then the conventional CSI-RS may still avoid the configurations in the CSI-RS configuration set in the unlicensed carrier DRS because the unlicensed carrier DRS may be configured to transmit the CSI-RS after a period of time; and may also use configurations in the CSI-RS configuration set in the unlicensed carrier DRS because no collision or coincidence will occur under the current configuration.

In a second solution: the conventional CSI-RS should avoid configurations transmitted on symbols 5 and 6 in the subframe.

If the conventional CSI-RS is configured to be transmitted on the symbols 5, 6 in the subframe, such as configurations 0, 5, 10, and/or 11 in the 3GPP protocol 36.211 Table 6.10.5.2-1, or the like, the conventional CSI-RS may collide with a PSS/SSS in the unlicensed carrier DRS. Therefore, the above configurations may be avoided and configurations other than the above configurations may be used to transmit the conventional CSI-RS.

In a third solution: the conventional CSI-RS should avoid the CSI-RS configuration in the unlicensed carrier DRS and avoid the configurations transmitted on the symbols 5 and 6 in the subframe.

The conventional CSI-RS should avoid the CSI-RS configuration in the unlicensed carrier DRS. For specific methods and examples, reference may be made to the description in the first solution, which will not be elaborated herein. Meanwhile, the conventional CSI-RS should avoid the configuration transmitted on the symbols 5 and 6 in the subframe. For specific methods and examples, reference may be made to the description in the second solution, which will not be elaborated herein.

In a fourth solution: the conventional CSI-RS may be configured to transmit on different symbols in the subframe same as the DRS. For example, the conventional CSI-RS may use configurations 4, 9, 18, and/or 19 in the 3GPP protocol 36.211 Table 6.10.5.2-1; then the conventional CSI-RS is transmitted on symbols 12 and 13, while the DRS occupies symbols 0 to 11. In this way, even if the conventional periodic or non-periodic CSI-RS encounters a DRS subframe, it does not coincide or collide with the signal in the DRS.

The transmission manner compatible with the CSI-RS in the unlicensed carrier includes the following solutions.

In a fifth solution: the conventional CSI-RS is not transmitted in the DRS subframe or a DMTC occasion.

The configuration of the conventional CSI-RS is not limited, and the CSI-RSs transmitted in the opportunity period may use the same or different configurations as the CSI-RS in the unlicensed carrier DRS subframe; however, in order to avoid the conventional CSI-RS subframes from colliding with the unlicensed carrier DRS, the conventional CSI-RS may not be transmitted in the DRS subframe, or the subframe occupied by the DRS occasion, or in the DTMC occasion.

In a sixth solution: the conventional CSI-RS is not transmitted on a resource element or a resource block, or an OFDM symbol occupied by the unlicensed carrier DRS.

The configuration of the conventional CSI-RS is not limited, but the conventional CSI-RS is not transmitted on the resource element or a time-frequency resource occupied by the unlicensed carrier DRS. To be specific:
the conventional CSI-RS is not transmitted on a symbol occupied by a PSS/SSS in the unlicensed carrier DRS; or,
the conventional CSI-RS is not transmitted on a resource element occupied by the PSS/SSS in the unlicensed carrier DRS; or,
the conventional CSI-RS is not transmitted on a resource block occupied by the PSS/SSS in the unlicensed carrier DRS; or,
the conventional CSI-RS is not transmitted on a symbol occupied by the CSI-RS in the unlicensed carrier DRS; or,
the conventional CSI-RS is not transmitted on a resource element occupied by the CSI-RS in the unlicensed carrier DRS.

If the conventional CSI-RS is configured to be transmitted on symbols 5, 6 in the subframe, such as configurations 0, 5, 10, and/or 11 in the 3GPP protocol 36.211 Table 6.10.5.2-1, or the like, the conventional CSI-RS may collide with the PSS/SSS in the unlicensed carrier DRS. Therefore, the conventional CSI-RS is not transmitted on the RB occupied by the PSS/SSS.

If the conventional CSI-RS is configured to be transmitted on symbols 9, 10 in the subframe, such as the configurations 1, 2, 3, 6, 7, 8, and/or 12 to 17 in the 3GPP protocol 36.211 Table 6.10.5.2-1, or the like, the conventional CSI-RS may coincide with the symbols occupied by the CSI-RS in the unlicensed carrier DRS. One possibility may be that the REs occupied by the conventional CSI-RS and the CSI-RS in the unlicensed carrier DRS are different, and the other possibility may be that the REs occupied by the conventional CSI-RS and the CSI-RS in the unlicensed carrier DRS are the same or partially coincided. At this time, the conventional CSI-RS may not be transmitted on the corresponding time-frequency resources.

If the conventional CSI-RS is configured to be transmitted on symbols 12, 13 in the subframe, such as the configurations 4, 9, 18, and/or 19 in the 3GPP protocol 36.211 Table 6.10.5.2-1, or the like, the conventional CSI-RS does not coincide with the symbols occupied by the unlicensed carrier DRS (the DRS in the unlicensed carrier may possibly totally occupy 12 symbols including symbols 0 to 11 only). Therefore, the conventional CSI-RS may be normally transmitted.

If the CSI-RS in the unlicensed carrier DRS or the conventional non-periodic CSI-RS (which is not a composition signal of the DRS) collides or coincides with a conventional opportunity period,
at this time, the CSI-RS in the unlicensed carrier DRS includes: a single-port CSI-RS for RRM measurement, or a single/multi-port configured CSI-RS which may be used for CSI measurement, etc. In the previous embodiments of the present disclosure, the latter uses a non-periodic transmission manner. In a fourth embodiment, the transmission manner adopted by the CSI-RS in the unlicensed carrier DRS is not limited.

A processing manner of the fourth embodiment provided in the embodiments of the present disclosure includes:
how to process a problem if the CSI-RS in the DRS collides or coincides with the conventional opportunity period CSI-RS.

The CSI-RS in the DRS includes: a single-port CSI-RS for RRM measurement, or a single/multi-port configured CSI-RS which may be used for CSI measurement, etc. In the previous embodiments of the present disclosure, the latter uses a non-periodic transmission manner. However, in the present embodiment, the transmission method adopted by the CSI-RS in the DRS is not limited, and either a non-periodic transmission manner or an opportunity period transmission manner may be adopted.

If the CSI-RS in the DRS collides or coincides with the conventional CSI-RS, or is transmitted in the same symbol as the conventional CSI-RS, the UE performs CSI measurement according to the CSI-RS in the DRS and/or the conventional CSI-RS. Specifically, the CSI measurements may be performed according to the following manners.

In a first solution: the UE performs CSI measurement according to the CSI-RS in the DRS. Preferably, the UE performs CSI measurement according to the CSI-RS in the DRS transmitted in a non-periodic manner.

If the CSI-RS in the DRS is transmitted in an opportunity period, the UE performs CSI measurement according to the CSI-RS in the DRS.

If the CSI-RS in the DRS is transmitted in a non-periodic manner, the UE may assume that the base station may transmit the CSI-RS in the DRS in the DMTC, and the UE may start to detect the downlink DCI signaling before the DMTC or in the DMTC, so as to obtain the information about whether the base station transmits the non-periodic CSI-RS in the DRS. If the information of transmitting the CSI-RS in the DRS is received, the UE performs CSI measurement according to the CSI-RS in the DRS. If the information of transmitting the CSI-RS in the DRS is not received, the UE performs CSI measurement according to the conventional CSI-RS (this is actually a scenario where no collision, coincidence, or same symbol transmission occurs).

In a second solution: the UE performs CSI measurement according to the conventional CSI-RS. Preferably, the UE performs CSI measurement according to the CSI-RS transmitted in an opportunity period.

The following is a fifth embodiment regarding CRS and CSI-RS power issues in an unlicensed carrier DRS.

When a base station transmits an unlicensed carrier DRS, both a CRS power and a CSI-RS power in the DRS are constant and used for RRM measurement no matter in which subframe in the DMTC the DRS is transmitted. Correspondingly, a UE will assume that the CRS power and the CSI-RS power in the unlicensed carrier DRS arre constant and used for RRM measurement. Moreover, a CRS power and a CSI-RS power are constant in each subframe in the same downlink transmission burst, but the CRS power and the CSI-RS power among different transmission bursts are varied. This results in inconsistencies between the CRS/CSI-RS power in a downlink burst and the CRS/CSI-RS in the unlicensed carrier DRS.

After the unlicensed carrier DRS is introduced, the UE may perform RRM measurement and possible CSI measurement based on the unlicensed carrier DRS.

Because signals in the unlicensed carrier DRS (such as CRS, PSS/SSS, and configurable CSI-RS) are similar to or the same as a signal structure in the downlink burst, especially in a subframe 0 and a subframe 5, the downlink burst will also transmit a CRS, PSS/SSS, or CSI-RS similarly. Therefore, if the UE receives the downlink burst in the DMTC, and mistakes the above signal in the downlink burst as an unlicensed carrier DRS, and performs RRM measurement or CSI measurement by using the signal power in the unlicensed carrier DRS, then, because the CRS power and the CSI-RS power in the unlicensed carrier DRS are constant while the CRS and CSI-RS powers in different downlink bursts are varied; even if the signal powers of the subframes in the same burst are the same, the signal powers may possibly be inconsistent with the signal power in the unlicensed carrier DRS; therefore, a measurement result is inaccurate.

In order to ensure the accuracy of the measurement result, the embodiment of the present disclosure provides a following solution: the base station controls the CRS and/or CSI-RS power in partial subframes or all the subframes in the downlink burst to be equal to the CRS and/or CSI-RS power in the unlicensed carrier DRS. The details are as follows.

In a first solution:
the CRS and/or CSI-RS power in the downlink burst within the DMTC in the downlink burst is equal to the CRS and/or CSI-RS power in the unlicensed carrier DRS. That is to say, a coincided portion of the signal in the downlink burst and the signal in the unlicensed carrier DRS is equal to the signal power in the unlicensed carrier DRS.

For the base station, when the base station transmits the downlink burst within the DMTC, the CRS and/or CSI-RS power in the downlink burst and the CRS and/or CSI-RS in the unlicensed carrier DRS respectively remain consistent or equal.

For the UE, when the UE receives the CRS and/or CSI-RS in the downlink burst within the DMTC, measurement such as RRM measurement is performed according to the CRS and/or CSI-RS power in the unlicensed carrier DRS.

For example, the downlink burst includes 10 subframes (subframe 0 to subframe 9), and the DMTC includes five subframes (subframe 5 to subframe 9). The CRS and CSI-RS power on all the subframes 5 to 9 in the downlink burst, and the CRS and CSI-RS power in the unlicensed carrier DRS respectively remain consistent or equal. The base station and the UE respectively perform corresponding actions according to the above method.

Further, a PDSCH EPRE on a CRS symbol and the PDSCH EPRE on a non-CRS symbol in the downlink burst within the DMTC may be adjusted according to *ρ_{A}*, *ρ_{B},* and CRS power on the protocol 36.213.

Or, the CRS and/or CSI-RS power in the downlink burst within the DMTC is correspondingly decreased or increased by the PDSCH power relative to the increased or decreased power of the CRS and/or CSI-RS in the unlicensed carrier DRS.

In a second solution:
If the downlink burst intersects or coincides with the DMTC, the CRS and/or CSI-RS power on all the subframes in the downlink burst and the CRS and/or CSI-RS in the unlicensed carrier DRS respectively remain the same. That is, as long as the signal in the unlicensed carrier DRS intersects or coincides with the signal in the downlink burst, the power of the signal in the entire downlink burst is the same as the signal power in the unlicensed carrier DRS.

For the base station, if the downlink burst intersects or coincides with the DMTC, when the base station transmits the downlink burst within the DMTC, the CRS and/or CSI-RS power in the downlink burst and the CRS and/or CSI-RS in the unlicensed carrier DRS respectively remain consistent or equal.

For the UE, if the downlink burst intersects or coincides with the DMTC, when the UE receives the CRS and/or CSI-RS in the downlink burst or the unlicensed carrier DRS, measurement such as RRM measurement is performed according to the CRS and/or CSI-RS power in the DRS. For example, the downlink burst includes 10 subframes (subframe 0 to subframe 9), and the DMTC includes five subframes (subframe 5 to subframe 9). The CRS and CSI-RS power on all the subframes 0 to 9 in the downlink burst, and the CRS and CSI-RS power in the unlicensed carrier DRS respectively remain consistent or equal. The base station and the UE respectively perform corresponding actions according to the above method.

Further, the PDSCH EPRE on the CRS symbol and the PDSCH EPRE on the non-CRS symbol in the downlink burst may be adjusted according to *ρ_{A}, ρ_{B}*, and CRS power on the protocol 36.213.

Or, the CRS and/or CSI-RS power in the downlink burst is correspondingly decreased or increased by the PDSCH power relative to the increased or decreased power of the CRS and/or CSI-RS.

In a third solution:
if the downlink burst includes the DRS, the CRS and/or CSI-RS power on the DRS subframe or all the subframes in the downlink burst and the CRS and/or CSI-RS power in the DRS respectively remain consistent or equal.

The embodiment of the present disclosure further provides a following sixth embodiment of how to transmit a SSS in a DRS in each subframe.

In Rel-12 and previous standard versions (for licensed carrier), sequences and mapping for transmitting a PSS and the SSS in a subframe 0 and a subframe 5 are specified (in the subframes 0 and 5, the PSS uses the same sequence, and the SSS uses different sequences). The UE may obtain a cell identity and subframe timing according to the received PSS and SSS. It is not specified how the SSS should be transmitted outside the subframe 0 and the subframe 5. A DRS in an unlicensed carrier may be transmitted in any subframe, and the unlicensed carrier DRS includes PSS and SSS signals. A PSS in the unlicensed carrier DRS may transmit the same sequence on all subframes. However, how to transmit the SSS in the unlicensed carrier DRS on each subframe is not known. In the present embodiment, the following manners are provided.

In a first solution:
the SSS sequences on individual subframes in one radio frame are all different. The UE may determine a subframe number according to the received SSS sequences.
1) New sequences are generated based on the SSS sequence on the Rel-12 subframe 0, and/or based on the SSS sequence on the Rel-12 subframe 5. The SSS sequences on individual subframes are all different.
   For example, the SSS sequences on subframes 1 to 9 are obtained based on the SSS sequence on the Rel-12 subframe 0 multiplied by different phase rotations or scrambling codes.
   For another example, the SSS sequences on subframes 0 to 4, and subframes 6 to 9 are obtained based on the SSS sequence on the Rel-12 subframe 5 multiplied by different phase rotations or scrambling codes.
   For another example, the SSS sequences on the subframes 1 to 4 are obtained based on the SSS sequence on the Rel-12 subframe 0 multiplied by different phase rotations or scrambling codes. The SSS sequences on subframes 6 to 9 are obtained based on the SSS sequence on the Rel-12 subframe 5 multiplied by different phase rotations or scrambling codes.
2) New sequences may be redesigned without being based on the SSS sequence on the existing Rel-12 subframe 0 or subframe 5. The SSS sequence on the subframe 0 or 5 may be the same as or different from the SSS sequence on the Rel-12 subframe 0 or 5.

In a second solution:
the same SSS sequence as that on the Rel-12 subframe 0 may be used as the SSS sequences in the unlicensed carriers DRS on the subframes 0 to 9 in one radio frame; or, the same SSS sequence as that on the Rel-12 subframe 5 may be used as the SSS sequences in the unlicensed carriers DRS on the subframes 0 to 9.

In a third solution:
the same SSS sequence as that on the Rel-12 subframe 0 may be used as the SSS sequences in the unlicensed carriers DRS on the subframes 0 to 4 in one radio frame; or, the same SSS sequence as that on the Rel-12 subframe 5 may be used as the SSS sequences in the unlicensed carriers DRS on the subframes 5 to 9.

In a fourth solution:
since the first solution in the present embodiment is relatively complex, the process of standardization and commercialization may lag behind, but the UE may directly determine the subframe number according to the PSS and SSS sequences transmitted in the first solution, and the UE detection complexity is relatively low. However, the normalization of the second solution and the third solution is relatively simple, but it is necessary for the UE to blindly detect signals such as SSS and CRS to determine the subframe number. Therefore, the UE detection complexity is relatively high.

Therefore, the second solution or the third solution may be standardized and commercialized first, and then the first solution may be considered for subsequent product and standard evolution. Considering the terminal compatibility among different versions, a mode indication signaling may be introduced and transmitted to the UE through a RRC signaling or downlink DCI signaling, so as to indicate whether the SSS sequence is generated according to the second solution or the third solution, or generated according to the first solution. For instance, the mode indication signaling is defined as Modelndicator: ModeIndicator=0, indicating that the SSS sequence is generated according to the second solution or the third solution; and ModeIndicator=1 indicates that the SSS sequence is generated according to the first solution. The terminals of different versions may receive and detect the SSS sequences according to the received mode indication signaling.

The embodiment of the present disclosure also provides a seventh embodiment of how to handle a relationship with a DRS during RSSI measurement.

A LAA UE performs DRS transmission based on the DMTC configuration and performs RSSI measurement based on a RSSI measurement timing configuration (RMTC). The Received Signal Strength Indicator (RSSI) is an indicator for received signal strength. A RSSI measurement value should reflect a load situation of an entire carrier frequency. However, since the discovery reference signal may be transmitted even when no data is transmitted in a cell, it cannot be equivalent to an effective load on the carrier frequency. Therefore, the relationship with DRS needs to be handled carefully during RSSI measurement.

Firstly, a base station configures a discovery reference signal measurement time configuration DMTC and a RSSI measurement time configuration RMTC for a UE.

In this step, the base station may configure the DMTC for the UE, and then configure the RMTC for the UE based on the DMTC.

The base station configures the DMTC for the UE, including a DMTC periodicity, a DMTC subframe offset, and duration (a subframe number). For instance, the RMTC period may be configured to be equal to the DMTC periodicity, or a divisor or multiple of the DMTC periodicity; and
the RMTC subframe offset may be configured to be equal to the DMTC subframe offset, or may be offset by k subframes based on the DMTC subframe offset, and a value range of k may be [-5,5].

The base station configures an average size of layer 1 for RSSI measurement, ranging from a minimum of 1 OFDM symbol to a maximum of 5 subframes (70 OFDM symbols). An intermediate value may include [7, 14, 21, 38, 35, 42, 49, 56, 63] OFDM symbols.

The base station configures duration of the RSSI measurement by using the average size of layer 1 (that is, the number of the average size of layer 1) as a unit.

Further, the base station may configure an OFDM symbol offset for RSSI measurement, or not configure the OFDM symbol offset.

Through the above configuration method, the base station achieves the purpose that the RSSI measurement resources and the DRS measurement resources do not conflict or conflict with each other seldomly, so that the RSSI measurement signals do not include DRS signals as far as possible, thereby reflecting the load conditions more accurately.

Then, the UE performs RSSI measurement on a corresponding resource according to the RMTC configured by the base station, which specifically includes the followings.

The UE determines an initial subframe position according to the subframe offset.

If the OFDM symbol offset is configured, then the UE determines an initial OFDM symbol of the RSSI measurement according to the subframe offset and the OFDM symbol offset; and if no OFDM symbol offset is configured, then the UE starts with symbol 0. In accordance with the average size of layer 1, the UE slides within the measurement duration, avoids subframes and/or symbols with DRS transmission, and performs RSSI measurement on subframes and/or symbols without DRS transmission.

For instance: the RSSI measurement duration is 5ms, and the average size of the RSSI layer 1 is 1ms. Then, the RSSI may have six observation windows for performing RSSI measurement within the duration. The UE starts from a first subframe and determines on each subframe. If there is a DRS in the current subframe, no RSSI measurement is performed. If there is no DRS, RSSI measurement is performed.

For another instance: the RSSI measurement duration is 5 ms, the average size of the RSSI layer 1 is one OFDM symbol, and no OFDM symbol offset is configured, or the OFDM symbol offset is 0. Then, the RSSI may have 70 observation windows for performing RSSI measurements within the duration. The UE starts from a first symbol of the first subframe and makes determinations on each OFDM symbol. If there is a DRS in the current symbol, no RSSI measurement is performed. If there is no DRS, RSSI measurement is performed. For example, the DRS exists only in OFDM symbols 0 to 11, then symbols 12 and 13 may be used for RSSI measurement.

In the above two examples, if the OFDM symbol or sub frame within the average size of a certain layer 1 contains a DRS, then the UE will skip the average size of the entire layer 1. The UE may also skip some of the subframes or symbols in the average size of the layer 1.

For another instance: the RSSI measurement duration is 6ms, and the average size of the RSSI layer 1 is 2ms. Then, the RSSI may have three observation windows for performing RSSI measurement within the duration. The UE starts from the first OFDM symbol of the first subframe and judges on each subframe and/or OFDM symbol. If DRS exists on the current subframe and/or OFDM symbol, the RSSI measurement does not include this subframe and/or OFDM symbol; and if no DRS exists on the current subframe and/or OFDM symbol, then the RSSI measurement includes the subframe and/or OFDM symbol.

Finally, the UE may report the RSSI value measured on the average size of each layer 1, and may also count and report the RSSI measurement values within a plurality of measurement duration. The counted quantity includes one or more of the followings, and the RSSI average value is obtained by performing a moving average on the RSSI values within the measurement duration:
a channel occupancy rate, when the RSSI value is greater than a certain threshold, it indicates that the channel is occupied/the channel is busy, and the channel occupancy rate is defined as a channel busy time/observation time intercepted by a node, which is denoted as A1/A;
a busy-idle ratio, the channel busy time intercepted by the node/(the observation time - the channel busy time intercepted by the node - channel time occupied by the node), i.e., A1/(A-A1-A2);
a duty ratio, the channel time occupied by the node/(the observation time - the channel busy time intercepted by the node - the channel time occupied by the node), i.e., A2/(A-A1-A2).

Fig. 10 is a schematic diagram of a composition structure of a base station according to the embodiment of the present disclosure. As shown in Fig. 10, in the embodiment of the present disclosure, a first base station at least includes a first configuration module and a first transmission module.

The first configuration module is adapted to configure a parameter for transmitting an unlicensed carrier DRS, wherein the parameter for transmitting an unlicensed carrier DRS includes: a DRS occasion offset, and/or a DRS occasion number, and/or DRS occasion position information, and/or a DRS period.

The first transmission module is adapted to transmit the configured parameter to a UE.

When the parameter includes the DRS occasion offset, the DRS occasion is an offset of a DRS occasion position to be transmitted relative to a DRS measurement timing configuration DMTC occasion initial position or a preset initial position.

When the parameter includes the DRS occasion number, the DRS occasion number is a number of DRS occasions to be transmitted within a preset period, or within a DRS transmission window, or within a configured DMTC, or within a measurement gap GAP.

The DRS occasion number is indicated by reusing a licensed carrier DRS duration parameter ds-OccasionDuration; or, is indicated by defining a new RRC parameter or a DCI signaling. The first transmission module is specifically adapted to: transmit the configured parameter to the UE through a radio resource control RRC signaling or a downlink control information DCI signaling.

The embodiment of the present disclosure further provides a second base station, including a second configuration module and a second transmission module.

The second configuration module is adapted to configure a transmission manner to transmit an unlicensed carrier discovery reference signal DRS, wherein a CSI-RS in an unlicensed carrier DRS for RRM measurement is transmitted by using a single port configuration by default; and a CSI-RS in an unlicensed carrier DRS for CSI measurement or interference measurement is transmitted by using a single/multi-port in a non-periodic manner.

The second transmission module is adapted to transmit the configured parameter to a UE.

The CSI-RS in an unlicensed carrier DRS for RRM measurement is transmitted by using a single port configuration by default.

The CSI-RS in the unlicensed carrier DRS for CSI measurement or interference measurement is transmitted by using a single/multi-port non-periodic manner.

The transmitting the single/multi-port CSI-RS in the unlicensed carrier DRS by using the non-periodic manner includes:
transmitting the CSI-RS in the unlicensed carrier DRS in data transmission by using a single/multi-port configuration for CSI measurement; and when the unlicensed carrier DRS is separately transmitted in other cases, transmitting the CSI-RS in the unlicensed carrier DRS by using a single-port configuration by default; or,
transmitting the single/multi-port CSI-RS in the unlicensed carrier DRS by using a non-periodic manner being not limited in data transmission.

A port configuration of the single/multi-port CSI-RS in the unlicensed carrier DRS is consistent with a physical port and/or a logical port for transmitting the data.

The single/multi-port CSI-RS in the unlicensed carrier DRS is configured with a transmission parameter in advance, and transmission is triggered at a time point needing transmission; or, the single/multi-port CSI-RS in the unlicensed carrier DRS is configured with a parameter when transmission is triggered.

The configuration of the single/multi-port CSI-RS for CSI measurement in the unlicensed carrier DRS is the same as a configuration of a single-port CSI-RS only for RRM measurement. The second transmission module is specifically adapted to: notify information about that the single port or the single/multi-port is adopted by the CSI-RS in the unlicensed carrier DRS, and/or parameters such as the CSI-RS port number, and/or information whether the CSI-RS is triggered to be transmitted in the DRS, to a UE through a RRC signaling or a downlink DCI. The embodiment of the present disclosure further provides a third base station, including a third configuration module and a third transmission module.

The third configuration module is adapted to, for a conventional CSI-RS, adopt a manner compatible with a CSI-RS in an unlicensed carrier to limit a configuration manner and/or a transmission manner of the conventional CSI-RS by the base station; wherein, the conventional CSI-RS is configured by the bas station, and is a CSI-RS that is not a composition signal of the DRS.

The third transmission module is adapted to transmist the configured conventional CSI-RS. The conventional CSI-RS is transmitted in a non-periodic manner.

The third configuration module is specifically adapted to:
transmit the conventional CSI-RS along with the unlicensed carrier DRS, wherein a time point for transmitting the conventional CSI-RS is within a DRS subframe or DMTC.

The conventional CSI-RS is transmitted in the DRS subframe or transmitted in an adjacent subframe after the DRS subframe; and
a blank symbol between the conventional CSI-RS and the DRS subframe is filled with a seizure signal to reserve a channel use right.

The third transmission module is specifically adapted to: notify following information to the UE through a RRC signaling or a downlink DCI:
whether the conventional CSI-RS is triggered to be transmitted, and/or port information of the conventional CSI-RS, and/or configuration information of the conventional CSI-RS, and/or time for transmitting the conventional CSI-RS.

The conventional CSI-RS is transmitted in an opportunity period.

When the conventional CSI-RS and the unlicensed carrier DRS are transmitted in the same subframe, the configuration manner compatible with the DRS in the unlicensed carrier includes:
the conventional CSI-RS avoiding the CSI-RS configuration in the unlicensed carrier DRS; or,
the conventional CSI-RS avoiding configurations transmitted on symbols 5 and 6 in the subframe; or,
the conventional CSI-RS avoiding the CSI-RS configuration in the unlicensed carrier DRS and avoiding the configurations transmitted on the symbols 5 and 6 in the subframe; or,
the conventional CSI-RS being configured to be transmitted on different symbols in the subframe same as the DRS.

The transmission manner compatible with the DRS in the unlicensed carrier includes:
not transmitting the conventional CSI-RS in the DRS subframe or a DMTC occasion; or,
not transmitting the conventional CSI-RS on a resource element or a resource block, or an OFDM symbol occupied by the unlicensed carrier DRS.

The not transmitting the conventional CSI-RS on the resource element, or a time-frequency resource occupied by the unlicensed carrier DRS includes:
not transmitting the conventional CSI-RS on a symbol occupied by a PSS/SSS in the unlicensed carrier DRS; or,
not transmitting the conventional CSI-RS on a resource element occupied by the PSS/SSS in the unlicensed carrier DRS; or,
not transmitting the conventional CSI-RS on a resource block occupied by the PSS/SSS in the unlicensed carrier DRS; or,
not transmitting the conventional CSI-RS on a symbol occupied by a CSI-RS in the unlicensed carrier DRS; or,
not transmitting the conventional CSI-RS on a resource element occupied by the CSI-RS in the unlicensed carrier DRS.

The embodiment of the present disclosure further provides a fourth base station, including a fourth configuration module and a fourth transmission module.

The fourth configuration module is adapted to configure a first parameter for transmitting an unlicensed carrier discovery reference signal DRS; wherein, the first parameter includes a DRS occasion offset, and/or a DRS occasion number, and/or DRS occasion position information, and/or a DRS period;
and/or,
configure a second parameter for transmitting the unlicensed carrier discovery reference signal DRS; wherein, the second parameter includes a CSI-RS in the unlicensed carrier DRS for RRM measurement, which is transmitted by using a single port configuration by default; and a CSI-RS in an unlicensed carrier DRS for CSI measurement or interference measurement, which is transmitted by using a single/multi-port non-periodic manner.

The fourth transmission module is adapted to transmit the configured parameter to the UE.

The embodiment of the present disclosure further provides a UE, which includes a processing module adapted to, when a CSI-RS in a DRS collides or coincides with a conventional CSI-RS, or is transmitted with the conventional CSI-RS on the same symbol, perform CSI measurement according to the CSI-RS in the DRS and/or the conventional CSI-RS.

When the UE performs CSI measurement according to the CSI-RS in the DRS, the processing module is specifically adapted to: perform, by the UE, the CSI measurement according to a CSI-RS in the DRS transmitted in a non-periodic manner.

When performing, by the UE, the CSI measurement according to the conventional CSI-RS, the processing module is specifically adapted to: perform, by the UE, the CSI measurement according to a CSI-RS transmitted in an opportunity period.

The embodiment of the present disclosure further provides a fifth base station, including a fifth configuration module which is adapted to control a CRS and/or CSI-RS power in a part of subframes or all subframes in a downlink burst to be equal to a CRS and/or CSI-RS power in the unlicensed carrier DRS.

The CRS and/or CSI-RS in a part of subframes or all subframes in the downlink burst is: a CRS and/or CSI-RS within a DMTC in the downlink burst; and the fifth configuration module is specifically adapted to: configure the CRS and/or CSI-RS within the DMTC in the downlink burst to be equal to the CRS and/or CSI-RS power in the unlicensed carrier DRS.

When the downlink burst intersects or coincides with the DMTC, the CRS and/or CSI-RS in a part of subframes or all subframes in the downlink burst is the CRS and/or CSI-RS on all the subframes in the downlink burst; and the fifth configuration module is specifically adapted to: configure the CRS and/or CSI-RS power on all the subframes in the downlink burst to be equal to the CRS and/or CSI-RS power in the unlicensed carrier DRS.

If the downlink burst includes the DRS, the CRS and/or CSI-RS in a part of subframes or all subframes in the downlink burst is the CRS and/or CSI-RS on the DRS subframe or all the subframes in the downlink burst; and
the fifth configuration module is specifically adapted to: configure the CRS and/or CSI-RS power on the DRS subframe or all the subframes in the downlink burst to be equal to the CRS and/or CSI-RS power in the unlicensed carrier DRS.

The embodiment of the present disclosure further provides a sixth base station, which includes a sixth configuration module adapted to configure a transmission manner for a SSS in an unlicensed carrier DRS in each subframe to be: SSS sequences on individual subframes in one radio frame being all different, or being the same partially.

When the SSS sequences on individual subframes in one radio frame are all different, the sixth configuration module is specifically adapted to:
generate new sequences based on a SSS sequence on an existing subframe 0, and/or based on a SSS sequence on an existing subframe 5, so that the SSS sequences on individual subframes are all different; or,
redesign new SSS sequences, so that the SSS sequences on individual subframes are all different.

When the SSS sequences on individual subframes in one radio frame are the same partially, the sixth configuration module is specifically adapted to:
use the same SSS sequence as that on the existing subframe 0 as SSS sequences in the unlicensed carrier DRS on a subframe 0 to a subframe 9 in one radio frame; or,
use the same SSS sequence as that on the existing subframe 5 as the SSS sequences in the unlicensed carrier DRS on a subframe 0 to a subframe 9 in one radio frame.

When the SSS sequences on individual subframes in one radio frame are the same partially, the sixth configuration module is specifically adapted to:
use the same SSS sequence as that on the existing subframe 0 as SSS sequences in the unlicensed carrier DRS on a subframe 0 to a subframe 4 in one radio frame; or,
use the same SSS sequence as that on the existing subframe 5 as the SSS sequences in the unlicensed carrier DRS on a subframe 5 to a subframe 9 in one radio frame.

The sixth base station further includes: a sixth transmission module adapted to transmit a mode indication signaling to the UE through a RRC signaling or a downlink DCI signaling; wherein, the mode indication is used to indicate a transmission manner of the SSS sequence.

The embodiment of the present disclosure further provides a seventh base station, including a seventh configuration module and a seventh transmission module.

The seventh configuration module is adapted to configure a discovery reference signal measurement time configuration DMTC and a RSSI measurement time configuration RMTC for a UE.

The seventh transmission module is adapted to transmit the configured information to the UE, so that the UE performs RSSI measurement on a corresponding resource according to the RMTC configured by the base station.

The seventh configuration module is specifically adapted to:
configure the DMTC for the UE, and configure the RMTC for the UE based on the DMTC.

The configuring, by the base station, the DMTC for the UE includes: a DMTC periodicity, a DMTC subframe offset, and duration.

The configuring the RMTC for the UE based on the DMTC includes:
configuring a RMTC period to be equal to the DMTC periodicity, or a divisor or multiple of the DMTC periodicity; and
configuring a RMTC subframe offset to be equal to the DMTC subframe offset or to be offset by k subframes based on the DMTC subframe offset.

The seventh transmission module is specifically adapted to: transmit the configured information to the UE, so that the UE counts and reports a RSSI value obtained by measuring an average size of each layer 1.

The counted quantity includes:
an average RSSI value obtained by performing moving average on the RSSI values within measurement duration; and/or,
a channel occupancy rate representing that a channel is occupied/a channel is busy when the RSSI value is greater than a certain threshold; and/or,
a busy-idle ratio of a channel busy time intercepted by a node to a calculated difference (observation time - channel busy time intercepted by the node - channel time occupied by the node); and/or,
a duty ratio of the channel busy time intercepted by the node to the calculated difference (observation time - channel busy time intercepted by the node - channel time occupied by the node).

The above description is merely preferred examples of the embodiments of the invention, but is not intended to limit the protection scope of the present disclosure. Any change, equivalent substitution, and improvement made within the spirit and principle of the present disclosure shall fall within the protection scope of the present disclosure.

### INDUSTRIAL APPLICABILITY

The method for processing a signal and the base station proposed in the embodiments of the present disclosure include: configuring, by the base station, the parameter for transmitting the unlicensed carrier DRS, and transmitting the configured parameter to the UE; wherein, the parameter includes the DRS occasion offset, and/or the DRS occasion number, and/or the DRS occasion position information, and/or the DRS period. In this way, the UE can perform related cell detection, synchronization and/or RRM measurement functions according to the received parameter. The configuration and transmission of the DRS in the unlicensed carrier are implemented through the technical solution provided by the embodiments of the present disclosure.

## Claims

1. A method for processing a signal, comprising: configuring, by a base station, a parameter for transmitting an unlicensed carrier discovery reference signal DRS, and issuing the configured parameter to a user equipment UE;
wherein, the parameter comprises a DRS occasion offset, and/or a DRS occasion number, and/or DRS occasion position information, and/or a DRS period.

2. The method for processing a signal according to claim 1, wherein when the parameter comprises the DRS occasion offset, the DRS occasion is an offset of a DRS occasion position to be transmitted relative to a DRS measurement timing configuration DMTC occasion initial position or a preset initial position.

3. The method for processing a signal according to claim 1, wherein when the parameter comprises the DRS occasion number, the DRS occasion number is a number of DRS occasions to be transmitted within a preset period, or within a DRS transmission window, or within a configured DMTC, or within a measurement gap GAP.

4. The method for processing a signal according to any one of claims 1 to 3, wherein the DRS occasion number is a number of times that the base station plans to transmit the DRS; or, a maximum number of times that the base station plans to transmit the DRS successfully.

5. The method for processing a signal according to claim 1, wherein when the parameter comprises the DRS occasion position information, the DRS occasion position information is position information of the DRS occasion to be transmitted by the base station within a preset period, or within a DRS transmission window, or within a configured DMTC, or within a measurement GAP.

6. The method for processing a signal according to any one of claims 1 to 4, wherein the DRS occasion number is indicated by reusing a licensed carrier DRS duration parameter ds-OccasionDuration; or, is indicated by defining a new RRC parameter or a DCI signaling.

7. The method for processing a signal according to claim 1, wherein the issuing the configured parameter to the UE comprises:
transmitting, by the base station, the configured parameter to the UE through a radio resource control RRC signaling or a downlink control information DCI signaling.

8. A method for processing a signal, comprising: configuring, by a base station, a transmission manner for transmitting an unlicensed carrier discovery reference signal DRS: a CSI-RS in the unlicensed carrier DRS for RRM measurement being transmitted by using a single port configuration by default; and a CSI-RS in the unlicensed carrier DRS for CSI measurement or interference measurement being transmitted by using a single/multi-port in a non-periodic manner.

9. The method for processing a signal according to claim 8, wherein the transmitting the single/multi-port CSI-RS in the unlicensed carrier DRS by using a non-periodic manner comprises:
transmitting the CSI-RS in the unlicensed carrier DRS in data transmission by using a single/multi-port configuration for CSI measurement; and when the unlicensed carrier DRS is separately transmitted in other cases, transmitting the CSI-RS in the unlicensed carrier DRS by using a single-port configuration by default; or,
transmitting the single/multi-port CSI-RS in the unlicensed carrier DRS by using a non-periodic manner being not limited in data transmission.

10. The method for processing a signal according to claim 8, wherein a port configuration of the single/multi-port CSI-RS in the unlicensed carrier DRS is consistent with a physical port and/or a logical port for data transmission.

11. The method for processing a signal according to claim 8, wherein the single/multi-port CSI-RS in the unlicensed carrier DRS is configured with a transmission parameter in advance, and transmission is triggered at a time point needing transmission; or, the single/multi-port CSI-RS in the unlicensed carrier DRS is configured with a parameter when transmission is triggered.

12. The method for processing a signal according to claim 8, wherein a configuration of the single/multi-port CSI-RS for CSI measurement in the unlicensed carrier DRS is the same as a configuration of a single-port CSI-RS only for RRM measurement.

13. The method for processing a signal according to claim 8, further comprising: notifying, by the base station, information about that the single port or the single/multi-port is adopted by the CSI-RS in the unlicensed carrier DRS, and/or parameters such as the CSI-RS port number, and/or information whether the CSI-RS is triggered to be transmitted in the DRS, to a UE through a RRC signaling or a downlink DCI.

14. A method for processing a signal, comprising: for a conventional CSI-RS, adopting, by a base station, a manner compatible with a DRS in an unlicensed carrier to limit a configuration manner and/or a transmission manner of the conventional CSI-RS;
wherein, the conventional CSI-RS is a CSI-RS that is not a composition signal of the DRS.

15. The method for processing a signal according to claim 14, wherein the conventional CSI-RS is transmitted in a non-periodic manner; and
the transmission manner compatible with the DRS in the unlicensed carrier comprises: a time point for transmitting the conventional CSI-RS being within a DRS subframe or DMTC, and the conventional CSI-RS being transmitted along with the unlicensed carrier DRS.

16. The method for processing a signal according to claim 15, wherein the conventional CSI-RS is transmitted in the DRS subframe or transmitted in an adjacent subframe after the DRS subframe; and
a blank symbol between the conventional CSI-RS and the DRS subframe is filled with a seizure signal to reserve a channel use right.

17. The method for processing a signal according to claim 14, further comprising:
notifying following information to the UE through a RRC signaling or a downlink DCI:
whether the conventional CSI-RS is triggered to be transmitted, and/or port information of the conventional CSI-RS, and/or configuration information of the conventional CSI-RS, and/or time for transmitting the conventional CSI-RS.

18. The method for processing a signal according to claim 14, wherein the conventional CSI-RS is transmitted in an opportunity period;
when the conventional CSI-RS and the unlicensed carrier DRS are transmitted in the same subframe, the configuration manner compatible with the DRS in the unlicensed carrier comprises:
the conventional CSI-RS avoiding the CSI-RS configuration in the unlicensed carrier DRS; or,
the conventional CSI-RS avoiding configurations transmitted on symbols 5 and 6 in the subframe; or,
the conventional CSI-RS avoiding the CSI-RS configuration in the unlicensed carrier DRS and avoiding the configurations transmitted on symbols 5 and 6 in the subframe; or,
the conventional CSI-RS being configured to be transmitted on different symbols in the subframe same as the DRS; and
the transmission manner compatible with the DRS in the unlicensed carrier comprises:
not transmitting the conventional CSI-RS in the DRS subframe or a DMTC occasion; or,
not transmitting the conventional CSI-RS on a resource element or a resource block, or an OFDM symbol occupied by the unlicensed carrier DRS.

19. The method for processing a signal according to claim 18, wherein the not transmitting the conventional CSI-RS on the resource element, or a time-frequency resource occupied by the unlicensed carrier DRS comprises:
not transmitting the conventional CSI-RS on a symbol occupied by a PSS/SSS in the unlicensed carrier DRS; or,
not transmitting the conventional CSI-RS on a resource element occupied by a PSS/SSS in the unlicensed carrier DRS; or,
not transmitting the conventional CSI-RS on a resource block occupied by a PSS/SSS in the unlicensed carrier DRS; or,
not transmitting the conventional CSI-RS on a symbol occupied by a CSI-RS in the unlicensed carrier DRS; or,
not transmitting the conventional CSI-RS on a resource element occupied by the CSI-RS in the unlicensed carrier DRS.

20. A method for processing a signal, comprising: configuring, by a base station, a first parameter for transmitting an unlicensed carrier discovery reference signal DRS, and issuing the configured parameter to a UE;
wherein, the first parameter comprises a DRS occasion offset, and/or a DRS occasion number, and/or DRS occasion position information, and/or a DRS period;
and/or,
configuring, by a base station, a second parameter for transmitting the unlicensed carrier discovery reference signal DRS, and issuing the configured parameter to the UE;
wherein, the second parameter comprises: a CSI-RS in the unlicensed carrier DRS for RRM measurement, which is transmitted by using a single port configuration by default; and a CSI-RS in an unlicensed carrier DRS for CSI measurement or interference measurement, which is transmitted by using a single/multi-port in a non-periodic manner.

21. The method for processing a signal according to claim 20, wherein the configuration of the first parameter is described according to any one of claims 2 to 7; and the configuration of the second parameter is described according to any one of claims 9 to 13.

22. A method for processing a signal, wherein when a CSI-RS in a DRS collides or coincides with a conventional CSI-RS, or is transmitted with a conventional CSI-RS on a same symbol, the method comprises:
performing, by a UE, CSI measurement according to the CSI-RS in the DRS and/or the conventional CSI-RS.

23. The method for processing a signal according to claim 22, wherein the performing, by the UE, the CSI measurement according to the CSI-RS in the DRS comprises:
performing, by the UE, the CSI measurement according to a CSI-RS in the DRS transmitted in a non-periodic manner.

24. The method for processing a signal according to claim 22, wherein the performing, by the UE, the CSI measurement according to the conventional CSI-RS comprises:
performing, by the UE, the CSI measurement according to a CSI-RS transmitted in an oppotunity period.

25. A method for processing a signal, wherein a base station configures a transmission manner for a SSS in an unlicensed carrier DRS in each subframe to be:
SSS sequences on individual subframes in one radio frame being all different, or being the same partially.

26. The method for processing a signal according to claim 25, wherein when the SSS sequences on individual sub frames in one radio frame are all different, the method comprises:
generating new sequences based on a SSS sequence on an existing subframe 0, and/or based on a SSS sequence on an existing subframe 5, so that the SSS sequences on individual subframes are all different; or,
redesigning new SSS sequences, so that the SSS sequences on individual subframes are all different.

27. The method for processing a signal according to claim 25, wherein when the SSS sequences on individual subframes in one radio frame are the same partially, the method comprises:
using the same SSS sequence as that on an existing subframe 0 as the SSS sequences in the unlicensed carrier DRS on a subframe 0 to a subframe 9 in one radio frame; or,
using the same SSS sequence as that on an existing subframe 5 as the SSS sequences in the unlicensed carrier DRS on a subframe 0 to a subframe 9 in one radio frame.

28. The method for processing a signal according to claim 25, wherein when the SSS sequences on individual subframes in one radio frame are the same partially, the method comprises:
using the same SSS sequence as that on an existing subframe 0 as SSS sequences in the unlicensed carrier DRS on a subframe 0 to a subframe 4 in one radio frame; or,
using the same SSS sequence as that on an existing subframe 5 as the SSS sequences in the unlicensed carrier DRS on a subframe 5 to a subframe 9 in one radio frame.

29. The method for processing a signal according to any one of claims 25 to 28, wherein the base station transmits a mode indication signaling to the UE through a RRC signaling or a downlink DCI signaling; and
wherein, the mode indication is used to indicate a transmission mode of the SSS sequence.

30. A method for processing a signal, comprising: configuring, by a base station, a discovery reference signal measurement time configuration DMTC and a RSSI measurement time configuration RMTC for a UE; and
performing, by the UE, RSSI measurement on a corresponding resource according to the RMTC configured by the base station.

31. The method for processing a signal according to claim 30, wherein the configuring, by the base station, the DMTC and the RMTC for the UE comprises:
configuring, by the base station, the DMTC for the UE, and configuring the RMTC for the UE based on the DMTC;
wherein, the configuring, by the base station, the DMTC for the UE comprises: a DMTC periodicity, a DMTC subframe offset, and duration.

32. The method for processing a signal according to claim 31, wherein the configuring the RMTC for the UE based on the DMTC comprises:
configuring a RMTC period to be equal to the DMTC periodicity, or a divisor or a multiple of the DMTC periodicity;
configuring a RMTC subframe offset to be equal to the DMTC sub frame offset or to be offset by k subframes based on the DMTC subframe offset.

33. The method for processing a signal according to claims 30 to 32, further comprising:
measuring, by the UE, on an average size of each layer 1 to obtain a RSSI value, wherein:
if an OFDM symbol or a subframe within the average size of a certain layer 1 contains the DRS, then the RSSI measurement does not comprise this subframe and/or this OFDM symbol, or the RSSI measurement is not performed on the average size of the current layer 1.

34. The method for processing a signal according to claim 33, further comprising:
reporting, by the UE, the RSSI value obtained by performing measurement on the average size of each layer 1; or, performing a statistics on the RSSI values obtained by performing measurement on the average size of the layer 1 included within a plurality of measurement duration and reporting a statistic result; the statistic quantity comprising:
an average RSSI value obtained by performing moving average on the RSSI values within the plurality of measurement duration; and/or,
a channel occupancy rate representing that a channel is occupied/a channel is busy when the RSSI value is greater than a certain threshold; and/or,
a busy-idle ratio of a channel busy time intercepted by a node to a calculated difference (an observation time - the channel busy time intercepted by the node - channel time occupied by the node); and/or,
a duty ratio of the channel time occupied by the node to the calculated difference (an observation time - a channel busy time intercepted by the node - the channel time occupied by the node).

35. A base station, comprising: a first configuration module and a first transmission module, wherein
the first configuration module is adapted to configure a parameter for transmitting an unlicensed carrier DRS, wherein the parameter for transmitting the unlicensed carrier DRS comprises: a DRS occasion offset, and/or a DRS occasion number, and/or DRS occasion position information, and/or a DRS period; and
the first transmission module is adapted to issue the configured parameter to a UE.

36. The base station according to claim 35, wherein when the parameter comprises the DRS occasion offset, the DRS occasion is an offset of a DRS occasion position to be transmitted relative to a DRS measurement timing configuration DMTC occasion initial position or a preset initial position.

37. The base station according to claim 35, wherein when the parameter comprises the DRS occasion number, the DRS occasion number is a number of DRS occasions to be transmitted within a preset period, or within a DRS transmission window, or within a configured DMTC periodicity, or within a measurement gap GAP.

38. The base station according to any one of claims 35 to 37, wherein the DRS occasion number is indicated by reusing a licensed carrier DRS duration parameter ds-OccasionDuration;
or, is indicated by defining a new RRC parameter or a DCI signaling.

39. The base station according to claim 38, wherein the first transmission module is adapted to: transmit the configured parameter to the UE through a radio resource control RRC signaling or a downlink control information DCI signaling.

40. A base station, comprising: a second configuration module and a second transmission module, wherein
the second configuration module is adapted to configure a transmission manner for transmitting an unlicensed carrier discovery reference signal DRS: a CSI-RS in the unlicensed carrier DRS for RRM measurement being transmitted by using a single port configuration by default; and a CSI-RS in the unlicensed carrier DRS for CSI measurement or interference measurement being transmitted by using a single/multi-port in a non-periodic manner; and
the second transmission module is adapted to issue the configured parameter to a UE.

41. The base station according to claim 40, wherein the CSI-RS in the unlicensed carrier DRS for RRM measurement is transmitted by using a single port configuration by default; and
the CSI-RS in the unlicensed carrier DRS for CSI measurement or interference measurement is transmitted by using a single/multi-port in a non-periodic manner.

42. The base station according to claim 40, wherein the transmitting the single/multi-port CSI-RS in the unlicensed carrier DRS by using the non-periodic manner comprises:
transmitting the CSI-RS in the unlicensed carrier DRS in data transmission by using a single/multi-port configuration for CSI measurement; when the unlicensed carrier DRS is separately transmitted in other cases, transmitting the CSI-RS in the unlicensed carrier DRS by using a single-port configuration by default; or,
transmitting the single/multi-port CSI-RS in the unlicensed carrier DRS by using a non-periodic manner being not limited in data transmission.

43. The base station according to claim 40, wherein a port configuration of the single/multi-port CSI-RS in the unlicensed carrier DRS is consistent with a physical port and/or a logical port for data transmission.

44. The base station according to claim 40, wherein the single/multi-port CSI-RS in the unlicensed carrier DRS is configured with a transmission parameter in advance, and transmission is triggered at a time point needing transmission; or, the single/multi-port CSI-RS in the unlicensed carrier DRS is configured with a parameter when transmission is triggered.

45. The base station according to claim 40, wherein a configuration of the single/multi-port CSI-RS for CSI measurement in the unlicensed carrier DRS is the same as a configuration of a single-port CSI-RS only for RRM measurement.

46. The base station according to claim 40, wherein the second transmission module is adapted to: information about that the single port or the single/multi-port is adopted by the CSI-RS in the unlicensed carrier DRS, and/or parameters such as the CSI-RS port number, and/or information whether the CSI-RS is triggered to be transmitted in the DRS, to a UE through a RRC signaling or a downlink DCI.

47. A base station, comprising: a third configuration module and a third transmission module, wherein
the third configuration module is adapted to, for a conventional CSI-RS, adopt a manner compatible with a DRS in an unlicensed carrier to limit a configuration manner and/or a transmission manner of the conventional CSI-RS by the base station; wherein, the conventional CSI-RS is a CSI-RS that is not a composition signal of the DRS; and
the third transmission module is adapted to transmit the configured conventional CSI-RS.

48. The base station according to claim 47, wherein the conventional CSI-RS is transmitted in a non-periodic manner; and
the third configuration module is adapted to:
transmit the conventional CSI-RS along with the unlicensed carrier DRS, wherein a time point for transmitting the conventional CSI-RS is within a DRS subframe or DMTC.

49. The base station according to claim 48, wherein the conventional CSI-RS is transmitted in the DRS subframe or is transmitted in an adjacent subframe after the DRS subframe; and
a blank symbol between the conventional CSI-RS and the DRS subframe is filled with a seizure signal to reserve a channel use right.

50. The base station according to claim 47, wherein the third transmission module is adapted to: notify following information to the UE through a RRC signaling or a downlink DCI:
whether the conventional CSI-RS is triggered to be transmitted, and/or port information of the conventional CSI-RS, and/or configuration information of the conventional CSI-RS, and/or time for transmitting the conventional CSI-RS.

51. The base station according to claim 47, wherein the conventional CSI-RS is transmitted in an opportunity period;
when the conventional CSI-RS and the unlicensed carrier DRS are transmitted in the same subframe, the configuration manner compatible with the DRS in the unlicensed carrier comprises:
the conventional CSI-RS avoiding the CSI-RS configuration in the unlicensed carrier DRS; or,
the conventional CSI-RS avoiding configurations transmitted on symbols 5 and 6 in the subframe; or,
the conventional CSI-RS avoiding the CSI-RS configuration in the unlicensed carrier DRS and avoiding configurations transmitted on symbols 5 and 6 in the subframe; or,
the conventional CSI-RS being configured to transmit on different symbols in the subframe same as the DRS; and
the transmission manner compatible with the DRS in the unlicensed carrier comprises:
not transmitting the conventional CSI-RS in the DRS subframe or a DMTC occasion; or,
not transmitting the conventional CSI-RS on a resource element or a resource block, or an OFDM symbol occupied by the unlicensed carrier DRS.

52. The base station according to claim 51, wherein the not transmitting the conventional CSI-RS on the resource element, or a time-frequency resource occupied by the unlicensed carrier DRS comprises:
not transmitting the conventional CSI-RS on a symbol occupied by a PSS/SSS in the unlicensed carrier DRS; or,
not transmitting the conventional CSI-RS on a resource element occupied by a PSS/SSS in the unlicensed carrier DRS; or,
not transmitting the conventional CSI-RS on a resource block occupied by a PSS/SSS in the unlicensed carrier DRS; or,
not transmitting the conventional CSI-RS on a symbol occupied by the CSI-RS in the unlicensed carrier DRS; or,
not transmitting the conventional CSI-RS on a resource element occupied by the CSI-RS in the unlicensed carrier DRS.

53. A base station, comprising: a fourth configuration module and a fourth transmission module, wherein
the fourth configuration module is adapted to configure a first parameter for transmitting an unlicensed carrier discovery reference signal DRS; wherein, the first parameter comprises a DRS occasion offset, and/or a DRS occasion number, and/or DRS occasion position information, and/or a DRS period;
and/or,
configure a second parameter for transmitting the unlicensed carrier discovery reference signal DRS; wherein, the second parameter comprises a CSI-RS in the unlicensed carrier DRS for RRM measurement, which is transmitted by using a single port configuration by default; and a CSI-RS in an unlicensed carrier DRS for CSI measurement or interference measurement, which is transmitted by using a single/multi-port in a non-periodic manner; and
the fourth transmission module is adapted to issue the configured parameter to the UE.

54. The base station according to claim 53, wherein the configuration of the first parameter is described according to any one of claims 35 to 38; and the configuration of the second parameter is described according to any one of claims 40 to 45.

55. A UE, comprising a processing module adapted to, when a CSI-RS in a DRS collides or coincides with a conventional CSI-RS, or is transmitted with the conventional CSI-RS on the same symbol, perform CSI measurement according to the CSI-RS in the DRS and/or the conventional CSI-RS.

56. The UE according to claim 55, wherein when performing, by the UE, the CSI measurement according to the CSI-RS in the DRS, the processing module is adapted to:
perform, by the UE, the CSI measurement according to a CSI-RS in the DRS transmitted in a non-periodic manner.

57. The method for processing a signal according to claim 55, wherein when the UE performs the CSI measurement according to the conventional CSI-RS, the processing module is adapted to:
perform, by the UE, the CSI measurement according to a CSI-RS transmitted in an opportunity period.

58. A base station, comprising a sixth configuration module adapted to configure a transmission manner for a SSS in an unlicensed carrier DRS in each subframe to be: SSS sequences on individual subframes in one radio frame being all different, or the same partially.

59. The base station according to claim 58, wherein when the SSS sequences on individual subframes in one radio frame are all different, the sixth configuration module is adapted to:
generate new sequences based on a SSS sequence on an existing subframe 0, and/or based on a SSS sequence on an existing subframe 5, so that the SSS sequences on individual subframes are all different; or,
redesign new SSS sequences, so that the SSS sequences on individual subframes are all different.

60. The base station according to claim 58, wherein when the SSS sequences on individual subframes in one radio frame are the same partially, the sixth configuration module is adapted to:
use the same SSS sequence as that on an existing subframe 0 as SSS sequences in the unlicensed carrier DRS on a subframe 0 to a subframe 9 in one radio frame; or,
use the same SSS sequence as that on an existing subframe 5 as the SSS sequences in the unlicensed carrier DRS on a subframe 0 to a subframe 9 in one radio frame.

61. The base station according to claim 58, wherein when the SSS sequences on individual subframes in one radio frame are the same partially, the sixth configuration module is adapted to:
use the same SSS sequence as that on an existing subframe 0 as SSS sequences in the unlicensed carrier DRS on a subframe 0 to a subframe 4 in one radio frame; or,
use the same SSS sequence as that on an existing subframe 5 as the SSS sequences in the unlicensed carrier DRS on a subframe 5 to a subframe 9 in one radio frame.

62. The base station according to any one of claims 58 to 61, further comprising a sixth transmission module adapted to transmit a mode indication signaling to the UE through a RRC signaling or a downlink DCI signaling; wherein, the mode indication is used to indicate a transmission mode of the SSS sequence.

63. A base station, comprising: a seventh configuration module and a seventh transmission module, wherein
the seventh configuration module is adapted to configure a discovery reference signal measurement time configuration DMTC and a RSSI measurement time configuration RMTC for a UE; and
the seventh transmission module is adapted to transmit the configured information to the UE, so that the UE performs RSSI measurement on a corresponding resource according to the RMTC configured by the base station.

64. The base station according to claim 63, wherein the seventh configuration module is adapted to:
configure the DMTC for the UE, and configure the RMTC for the UE based on the DMTC;
wherein, the configuring, by the base station, the DMTC for the UE comprises: a DMTC periodicity, a DMTC subframe offset and duration.

65. The base station according to claim 64, wherein the configuring the RMTC for the UE based on the DMTC comprises:
configuring a RMTC period to be equal to the DMTC periodicity, or to be a divisor or a multiple of the DMTC periodicity; and
configuring a RMTC subframe offset to be equal to the DMTC subframe offset or to be offset by k subframes based on the DMTC subframe offset.

66. The base station according to claims 63 to 65, wherein the seventh transmission module is adapted to: transmit the configured information to the UE, so that the UE performs a statistics and reports a RSSI value obtained by measuring an average size of each layer 1.

67. The base station according to claim 66, wherein the statistic quantity comprises:
an average RSSI value obtained by performing a moving average on the RSSI values within measurement duration; and/or,
a channel occupancy rate representing that a channel is occupied/a channel is busy when the RSSI value is greater than a certain threshold; and/or,
a busy-idle ratio of a channel busy time intercepted by a node to a calculated difference (an observation time - the channel busy time intercepted by the node - a channel time occupied by the node); and/or,
a duty ratio of the channel time occupied by the node to a calculated difference (an observation time - a channel busy time intercepted by the node - the channel time occupied by the node).

68. A computer readable storage medium storing a computer-executable instruction, wherein the computer-executable instruction is adapted to execute the method for processing a signal according to any one of claims 1 to 7, and/or execute the method for processing a signal according to any one of claims 8 to 13, and/or execute the method for processing a signal according to any one of claims 14 to 19, and/or execute the method for processing a signal according to any one of claims 20 to 21, and/or perform the method for processing a signal according to any one of claims 22 to 24, and/or execute the method for processing a signal according to any of claims 25 to 29, and/or execute the method for processing a signal according to any one of claims 30 to 34.
